# FASCICULE DE BREVET EUROPEEN

(11) **EP 2 310 458 B1**
(45) Date de publication et mention de la délivrance du brevet: **17.08.2016**
(21) Numéro de dépôt: 09781253.1
(22) Date de dépôt: 29.07.2009
(51) Int. Cl.: C08L 83/04, C09D 183/04, C08J 3/24, D06M 15/643, D21H 19/40, D21H 19/32, D21H 19/62, D21H 21/14, B05D 5/08, C08K 3/34, C08K 5/5445, C09D 7/12, C08J 7/18, D06M 11/79, C08G 77/16

(54) **COMPOSITION SILICONE D'ENDUCTION D'UN SUPPORT FLEXIBLE DESTINE A FORMER UN REVETEMENT RETICULE AYANT UN ACCROCHAGE, UNE RESISTANCE MECANIQUE ET UNE REACTIVITE ACCRUS**
SILIKONZUSAMMENSETZUNG ZUM BESCHICHTEN EINES FLEXIBLEN TRÄGERS ZUR BILDUNG EINES VERNETZTEN ÜBERZUGS MIT VERBESSERTER HAFTUNG, MECHANISCHER FESTIGKEIT UND REAKTIVITÄT
SILICONE COMPOSITION FOR COATING A FLEXIBLE SUPPORT INTENDED TO FORM A CROSSLINKED COATING HAVING INCREASED ADHESION, MECHANICAL STRENGTH AND REACTIVITY

(30) Priorité: 30.07.2008 FR 0855257
(43) Date de publication de la demande: 20.04.2011
(73) Titulaire: Bluestar Silicones France SAS, 69003 Lyon (FR)
(72) Inventeur: FEDER, Michel, F-69100 Villeurbanne (FR); MAADADI, Yassine, F-69150 Decines (FR)
(74) Mandataire: Cabinet Plasseraud
(86) Numéro de dépôt international: PCT/EP2009/059827
(87) Numéro de publication internationale: WO 2010/012787

(56) Documents cités:
- EP-A- 1 867 401
- US-A- 5 087 684
- US-A1- 2002 058 112
- US-B1- 6 425 600

## Description

### Domaine de l'invention

Le domaine de l'invention est celui des compositions silicones réticulables ou réticulées, susceptibles d'être utilisées, notamment, pour former un revêtement ou film hydrofuge et anti-adhérent pour support fibreux ou non, par exemple en papier ou analogue, ou bien encore en polymère naturel ou synthétique.

Plus précisément, l'invention se rapporte aux compositions silicones du type de celles comprenant :
► des polyorganosiloxanes (POS) fonctionnalisés porteurs, sur une même molécule ou non de motifs Si-H et Si-IE avec IE représentant un groupement comportant au moins une insaturation éthylénique, de préférence vinylique ; les motifs Si-H étant susceptibles de réagir avec les motifs Si-IE par polyaddition ;
► et/ou des POS réticulables par voie cationique et/ou radicalaire, par l'intermédiaire de groupements fonctionnels de réticulation GFR comprenant au moins une fonction éthyléniquement insaturée - avantageusement acrylate et/ou alcényléther - et/ou époxyde et/ou oxéthane;
► un catalyseur métallique approprié de préférence platinique s'agissant de la réticulation par polyaddition, et de préférence un amorceur cationique comprenant comme amorceur thermique et/ou photoamorceur, de préférence choisi parmi les sels d'onium, s'agissant de la réticulation ;
► éventuellement au moins un système modulateur d'adhérence, par exemple à base de résine silicone comprenant des motifs siloxyles Q: (SiO_{4/2}) et/ou T: (RSiO_{3/2}) ;
► éventuellement d'autres additifs (charges, accélérateurs, inhibiteurs, pigments, tensioactifs...).

L'invention concerne également:
- la préparation de cette composition silicone;
- les supports revêtus d'un revêtement obtenu à partir de cette composition silicone;
- la fabrication d'articles en silicone réticulé, notamment des revêtements e.g. hydrofuges et/ou anti-adhérents pour supports souples fibreux ou non (papier ou film polymère), à partir de cette composition susvisée;
- un procédé pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation de cette composition silicone

Par exemple, ces compositions silicones liquides (avec/sans solvant ou en émulsion aqueuse) sont appliquées sur les films supports dans des dispositifs industriels d'enduction comportant des cylindres fonctionnant à très grande vitesse (par exemple 600 m/min). Les compositions silicones liquides d'enduction auxquelles on s'intéresse plus particulièrement dans le cadre de l'invention sont sans solvant.
En pratique, le taux de dépôt de silicone anti-adhérent est compris entre 0,1 et 2 de préférence 0,3 et 1 g/m², ce qui correspond à des épaisseurs de l'ordre du micromètre. Une fois appliquée sur le support souple, la composition silicone réticule pour former un revêtement solide en silicone (e.g. élastomère) anti-adhérent et/ou hydrofuge. Dans le cas de systèmes silicones liquides sans solvant réticulant par polyaddition [Si-H/Si-alcényle-(Vi)-], la réticulation est effectuée sous activation thermique.

La réticulation des compositions réticulables par polyaddition, peut être effectuée avec une activation thermique.

La réticulation des compositions réticulables par voie cationique et/ou radicalaire, peut être effectuée avec une activation par exposition à un faisceau d'électrons et/ou à un rayonnement actinique du type UV et/ou avec une activation thermique.

Les supports souples revêtus d'un film silicone anti-adhérent peuvent être par exemple:
- un ruban adhésif dont la face interne est enduite d'une couche d'adhésif sensible à la pression et dont la face externe comporte le revêtement silicone anti-adhérent ;
- ou un papier (par exemple glassine) ou un film polymère de protection de la face adhésive d'un élément autocollant ou adhésif sensible à la pression ;
- ou un film polymère du type polychlorure de vinyle (PVC), PolyPropylène, Polyéthylène ou PolyEthylèneTéréphtalate.

Ces supports peuvent être notamment des supports d'étiquettes autocollantes (doublures ou "*liners*" constitués de papiers ou films polymères siliconés).

### Problèmes techniques et Art antérieur

Pour tous ces supports revêtus industriellement de revêtements silicones anti-adhérents réticulés, le souci constant des industriels est d'augmenter conjointement l'accrochage au sortir de la machine d'enduction, la résistance mécanique et la réactivité du revêtement silicone.

L'accrochage ou l'adhérence du revêtement sur le support au sortir de la machine d'enduction, c'est-à-dire dans les trente minutes qui suivent l'enduction et la réticulation, ainsi que la résistance mécanique ou cohésion du revêtement, peuvent être appréciées, par exemple, par le test métier de "*rub-off*", qui consiste à frotter la surface du revêtement avec un doigt et à mesurer le nombre de passages successifs qui conduisent à une dégradation du revêtement. La résistance mécanique est parfois exprimée au travers de la résistance à l'abrasion.

S'agissant de la réactivité, compte tenu des cadences industrielles d'enduction à très haute vitesse, la cinétique de réticulation doit être instantanée et la réticulation doit être correcte, c'est-à-dire que les films silicones anti-adhérents doivent être suffisamment réticulés pour pouvoir remplir au mieux leur fonction d'anti-adhérence et posséder les qualités mécaniques souhaitables. L'appréciation de la qualité de la réticulation du film silicone anti-adhérent peut notamment se faire au travers du dosage des composés extractibles non réticulés, dont la quantité doit être la plus réduite possible.

En pratique, il est très difficile d'améliorer conjointement l'accrochage, la résistance mécanique et la réactivité.

L'objectif susvisé est encore plus ambitieux si on y ajoute tout ou partie des contraintes suivantes:
- diminuer les concentrations en catalyseur, en particulier lorsqu'il s'agit de platine qui, du fait de son coût, est un élément prépondérant du prix de revient d'un système de polyaddition, dans cette application revêtement silicone anti-adhérent et/ou hydrofuge, pour supports souples (papier ou film polymère), sachant que si le taux de platine est réduit à un taux inférieur à 100 voire à 80 ppm dans la composition, il n'est alors plus possible d'obtenir des revêtements silicones anti-adhérents et/ou hydrofuges, parfaitement réticulés;
- diminuer la température de réticulation pour des raisons d'économie;
- augmenter la vitesse de défilement du support à enduire;
- obtenir une bonne anti-adhérence de la face externe libre du revêtement silicone, c'est-à-dire une force de décollement faible et contrôlée pour l'élément destiné à être disposé sur le support revêtu par le film silicone anti-adhérent (e.g. face adhésive d'une étiquette ou d'un ruban du même nom);
- allonger la durée de vie à température ambiante des compositions silicones d'enduction réticulables lorsqu'elles sont sous forme de bain d'enduction dans les machines industrielles d'enduction.

Pour tenter de surmonter ces difficultés, plusieurs pistes ont été explorées : modifier la nature des POS réticulant à motifs Si-H et/ou des POS à motifs Si-IE ou bien encore incorporer divers additifs.

Pour ce qui concerne la nature des POS réticulants, est déjà divulguée de manière générale, l'utilisation de réticulants de type de ceux comportant des motifs siloxy : diméthylhydrogénosiloxy (M'), méthylhydrogénosiloxy (D'), diméthylsiloxy (D) et triméthylsiloxy (M), pour des compositions silicones liquides réticulables par polyaddition (=Si-H/Si-Vinyle), pour former des revêtements anti-adhérents sur des supports souples (papiers couchés ou non, films polymères...).

Il en est ainsi dans la demande de brevet EP-A-0 523 660 qui décrit des compositions silicones réticulables en quelques secondes à des températures inférieures à 100°C et comportant des résines POS =Si-Vi en réseau (non linéaires) et des réticulants POS =Si-H de type M(D')ₑ(D)ₑM, M(D')ₑM, M(D')ₑ(D)ₑM', M(D)ₑM' avec "e" correspondant à des nombres entiers identiques ou différents entre eux, ces réticulants étant employés seuls ou en mélange.

Ce genre de systèmes réticulants permet d'obtenir une bonne réactivité (souvent à faible teneur en catalyseur) mais présente généralement comme inconvénient l'obtention de revêtements dont les propriétés d'adhérence et de résistance à l'abrasion sont nettement insuffisantes.

La demande WO-A-03/054059 décrit des réticulants POS =Si-H particuliers conférant des propriétés avantageuses au revêtement réticulé, en termes de taux d'extractibles réduit et de durée de stabilité du bain de composition silicone liquide d'enduction, notamment. Ces réticulants POS =Si-H particuliers sont constitués par des POS hydrogénés en bout de chaîne et dans la chaîne : 0 < D/D' ≤ 0,4 et 20 ≤ M'/D' x 1000 ≤ 60, tels que : M_{1,2}D₆D'₃₀M'_{0,8} ou M_{0,8}D₄D'₂₅M'_{1,2}.

Par ailleurs, les vitesses linéaires de défilement de la bande de supports flexibles de plus en plus élevées sur des machines d'enduction en continu entraîne un problème d'apparition d'un brouillard ou d'un aérosol ("misting", "fogging") dans l'environnement de la tête d'enduction. Ce brouillard a les conséquences négatives suivantes : perte de consommable, aspect, qualités mécaniques (rub-off), anti-adhérence du revêtement réticulé, hygiène industrielle et sécurité des opérateurs, encrassement rapide du dispositif d'enduction à cylindres, d'où des contraintes d'entretien et une usure prématurée.

L'une des possibilités connues pour lutter contre ce problème de "misting" est d'utiliser une composition silicone liquide d'enduction comprenant une phase silicone de viscosité inférieure à 2000 mPa.s à 25°C comprenant des POS réticulables par polyaddition , des POS réticulants, un catalyseur et un agent anti-misting à base de particules non-cellulosique dans une phase silicone. Cette composition silicone liquide d'enduction est décrite dans la demande de brevet WO-A-02/18506.

Dans ce contexte, la présente invention vise à satisfaire notamment à au moins l'un des objectifs suivants :
a. Proposer une nouvelle composition silicone liquide d'enduction, réticulable en revêtement anti-adhérent et/ou hydrofuge pour support souple, sous activation thermique et/ou actinique et/ou par faisceau d'électrons, de manière instantanée pour produire sur tous types de supports souples (papier -e.g. glassine- ou polymère -e.g. polyester tel que PolyEthylèneTérephtalate PET-), un revêtement silicone réticulé doté -en particulier au sortir de la machine d'enduction, c'est-à-dire dans les trente minutes qui suivent l'enduction et la réticulation- d'excellentes propriétés d'accrochage (adhérence) et de résistance mécanique ou cohésion - "*rub-off*"-.
b. Proposer une nouvelle composition silicone liquide d'enduction, réticulable en revêtement anti-adhérent et/ou hydrofuge pour support souple, sous activation thermique et/ou actinique et/ou par faisceau d'électrons, de manière instantanée pour produire sur tous types de supports souples (papier -e.g. glassine- ou polymère -e.g. polyester tel que PolyEthylèneTérephtalate PET-), un revêtement réticulé utile notamment comme support d'étiquettes autocollantes (liners constitués de papiers ou films siliconés) et présentant un compromis réactivité / cohésion amélioré, la réactivité étant caractérisée par des taux d'extractibles réduits et la cohésion par le "*rub-off*" notamment en sortie machine.
c. Proposer une nouvelle composition silicone liquide d'enduction, réticulable en revêtement anti-adhérent et/ou hydrofuge pour support souple, sous activation thermique et/ou actinique et/ou par faisceau d'électrons sur des machines d'enduction à haute vitesse, cette composition silicone ayant une faible teneur en catalyseur (par exemple en Platine).
d. Proposer une nouvelle composition silicone liquide d'enduction, réticulable en revêtement anti-adhérent et/ou hydrofuge pour support souple, sous activation thermique et/ou actinique et/ou par faisceau d'électrons sur des machines d'enduction à haute vitesse, cette composition silicone permettant de diminuer la température de réticulation pour des raisons d'économie.
e. Proposer une nouvelle composition silicone liquide d'enduction, réticulable en revêtement anti-adhérent et/ou hydrofuge pour support souple, sous activation thermique et/ou actinique et/ou par faisceau d'électrons sur des machines d'enduction à haute vitesse, cette composition silicone permettant d'augmenter la vitesse de défilement du support à enduire.
f. Proposer une nouvelle composition silicone liquide d'enduction, réticulable en revêtement anti-adhérent et/ou hydrofuge pour support souple, sous activation thermique et/ou actinique et/ou par faisceau d'électrons sur des machines d'enduction à haute vitesse, cette composition silicone permettant d'obtenir une bonne anti-adhérence de la face externe libre du revêtement silicone, c'est-à-dire une force de décollement faible et contrôlée pour l'élément destiné à être disposé sur le support revêtu par le film silicone anti-adhérent (e.g. face adhésive d'une étiquette ou d'un ruban du même nom).
g. Proposer une nouvelle composition silicone liquide d'enduction, réticulable en revêtement anti-adhérent et/ou hydrofuge pour support souple, sous activation thermique et/ou actinique et/ou par faisceau d'électrons sur des machines d'enduction à haute vitesse, cette composition silicone permettant d'allonger la durée de vie à température ambiante des compositions silicones d'enduction réticulables lorsqu'elles sont sous forme de bain d'enduction dans les machines industrielles d'enduction.
h. Proposer une nouvelle composition silicone liquide d'enduction, réticulable en revêtement anti-adhérent et/ou hydrofuge pour support souple, sous activation thermique et/ou actinique et/ou par faisceau d'électrons sur des machines d'enduction à haute vitesse, cette composition silicone étant en outre facile à préparer et économique.
i. Proposer une nouvelle utilisation d'un empâtage silicone (suspension concentrée) comportant de 10 à 50 %, de préférence de 10 à 45% en poids de charge particulaire dans une huile silicone de préférence réactive, pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation d'une composition silicone liquide d'enduction à grande vitesse.
j. Proposer un nouveau procédé pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation d'une composition silicone liquide d'enduction à grande vitesse.
k. Proposer un nouveau support revêtu d'un revêtement obtenu à partir de la composition silicone liquide d'enduction visée dans les objectifs a à h.
l. Proposer un nouveau procédé de production de revêtements silicones réticulés anti-adhérents et/ou hydrofuges, sur supports souples, à partir de la composition silicone liquide d'enduction visée dans les objectifs a à h.

### Description succincte de l'invention

Ces objectifs, parmi d'autres, sont atteints par la présente invention qui concerne en premier lieu une nouvelle composition silicone liquide d'enduction à grande vitesse sur supports flexibles fibreux ou non et susceptible de réticuler pour former un revêtement anti-adhérent et hydrofuge, comprenant une base silicone apte à durcir par des réactions de polyaddition, radicalaires ou cationiques comprenant pour 100 parties en poids de base, de 1 à 40 parties en poids, de préférence de 1 à 30, de préférence de 3 à 20 parties en poids d'un additif constitué essentiellement:
I. de 1 à 80 % en poids, ou de 5 à 80 % en poids, ou encore de 10 à 50 % en poids, de préférence de 10 à 45 % en poids de charge particulaire siliceuse, de préférence nanométrique, traitée par au moins un agent de compatibilisation,
II. de 95 à 20 % en poids, de préférence 90 à 55 % en poids d'au moins une huile silicone ayant une viscosité ηII en mPa.s à 25°C telle que dans l'ordre croissant de préférence :
   - 8.000 ≤ ηII ≤ 2.000.000
   - 8.000 ≤ ηII ≤ 500.000
   - 8.000 ≤ ηII ≤ 100.000
III. et éventuellement d'au moins une huile silicone de viscosité inférieure ou égale à 8.000 mPa.s à 25°C ;
la charge particulaire siliceuse étant dispersée dans l'huile silicone II, éventuellement complétée par l'huile silicone III;
cette composition ayant une viscosité globale inférieure ou égale à 5.000 mPa.s à 25°C, de préférence inférieure ou égale à 2.000 mPa.s à 25°C,

La composition selon l'invention permet d'améliorer de manière spectaculaire (en particulier) au sortir de la machine d'enduction, c'est-à-dire par exemple dans les trente minutes qui suivent l'enduction et la réticulation le compromis accrochage/cohésion/réactivité par incorporation d'une dose optimale d'un additif silicone particulier comprenant des (nano)charges minérales (par exemple silice de pyrogénation traitée in situ par de l'HMDZ (hexaméthyldisilazane) et /ou de VMN (DiVinyltétraméthyldisilazane) dispersées dans une huile silicone (par exemple à motifs Si-IE e.g vinylés) visqueuse (viscosité par exemple supérieure à 1.000 mPa.s à 25°C).

Cette composition silicone à base d'huiles silicones réticulant de préférence par polyaddition, par voie cationique ou radicalaire, est à prise très rapide et est capable de former un revêtement anti-adhérent et à haute tenue mécanique sur papier (par exemple glassine ou kraft) ou sur un film, notamment en polyester ou polyéthylène. Le revêtement obtenu est particulièrement adhérent et robuste sur le support. Il permet d'apporter la propriété d'anti-adhérence ("*release*") vis-à-vis des adhésifs types "Adhésifs Sensibles à la pression" ("Pressure Sensitive Adhesives (PSA)", et présente une excellente résistance mécanique même après vieillissement accéléré du support (températures et humidité relative élevées) et au contact prolongé avec ces adhésifs, y compris acryliques.

En second lieu, l'invention concerne un support revêtu d'un revêtement obtenu à partir de la composition selon l'invention caractérisé qu'il est choisi parmi les supports souples en papier, carton ou analogue, les supports souples fibreux tissés ou non, les supports souples comportant du polyéthylène et/ou du polypropylène et/ou du polyester (e.g. PET) et/ou du polychlorure de vinyle, et/ou les supports souples imprimables thermiquement.

En troisième lieu, l'invention concerne l'utilisation d'un additif silicone (suspension concentrée) comportant de 1 ou 5 à 80 % en poids, ou encore de 10 à 50 % en poids, et de préférence de 10 à 45 % en poids de charge particulaire dans une huile silicone de préférence réactive, pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation par des réactions de polyaddition, radicalaires ou cationiques d'une composition silicone liquide d'enduction à grande vitesse. De préférence, la composition silicone liquide d'enduction à grande vitesse est telle que définie précédemment.

En quatrième lieu, l'invention concerne un procédé de production de revêtements silicones réticulés anti-adhérents et/ou hydrofuges, sur supports souples, caractérisé en ce qu'il consiste essentiellement à mettre en oeuvre la composition silicone liquide d'enduction selon l"invention, dans une machine industrielle d'enduction à grande vitesse.

En cinquième lieu, l'invention concerne un procédé pour augmenter conjointement l'accrochage au sortir de la machine d'enduction, la résistance mécanique et la réactivité d'un revêtement silicone anti-adhérent et hydrofuge enduit sur un support flexible fibreux ou non, dans lequel on réticule une composition silicone liquide d'enduction à grande vitesse,
ladite composition silicone liquide comprenant une base silicone apte à durcir par des réactions de polyaddition, radicalaires ou cationiques comprenant pour 100 parties en poids de base, de 1 à 40 parties en poids, de préférence de 1 à 30, de préférence de 3 à 20 parties en poids d'un additif constitué essentiellement:
I. de 1 à 80 % en poids, ou de 5 à 80 % en poids, ou encore de 10 à 50 % en poids, de préférence de 10 à 45 % en poids de charge particulaire siliceuse, de préférence nanométrique, traitée par au moins un agent de compatibilisation,
II. de 95 à 20 % en poids, de préférence 90 à 55 % en poids d'au moins une huile silicone ayant une viscosité ηII en mPa.s à 25°C telle que dans l'ordre croissant de préférence :
   - 8.000 ≤ ηII ≤ 2.000.000
   - 8.000 ≤ ηII ≤ 500.000
   - 8.000 ≤ ηII ≤ 100.000
III. et éventuellement d'au moins une huile silicone de viscosité ηIII inférieure ou égale à 8.000 mPa.s à 25°C ;
la charge particulaire siliceuse étant dispersée dans l'huile silicone II,
éventuellement complétée par l'huile silicone III;
et ladite composition ayant une viscosité globale inférieure ou égale à 5.000 mPa.s à 25°C, de préférence inférieure ou égale à 2.000 mPa.s à 25°C.

### Définitions

L'additif particulier (I), (II) (et éventuellement III) de la composition selon l'invention peut être indifféremment désigné également par le terme "empâtage" ou "dispersion".

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse. Cette viscosité peut être mesurée par exemple à l'aide d'un viscosimètre BROOKFIELD, selon la norme AFNOR NFT 76 102 de février 1972.

L'expression "*au sortir de la machine d*'*enduction*" signifie, au sens du présent exposé, par exemple dans les trente minutes qui suivent l'enduction et la réticulation par activation thermique (e.g. dans le four ou par exemple sous les lampes IR) et/ou par activation actinique (e.g. lampes UV) et/ou par activation à l'aide d'un faisceau d'électrons.

Concernant la terminologie "silicones" utilisée dans le présent exposé:
- un motif siloxyle "D" désigne -(R₂)SiO_{2/2}-
- un motif siloxyle "D"' désigne -RHSiO_{2/2}-
- un motif siloxyle "D^{Vi}" désigne -R(Vinyle)SiO_{2/2}-
- un motif siloxyle "T" désigne -RSiO_{3/2}-
- un motif siloxyle "Q" désigne SiO_{4/2}-

Dans ces formules, les R représentent des groupements monovalents identiques ou différents entre eux, chaque R étant de préférence un groupement de :
* un radical alkyle ayant de 1 à 5 atomes de carbone et pouvant comporter de 1 à 6 atomes de chlore,
* des radicaux cycloalkyles ayant de 3 à 8 atomes de carbone et pouvant contenir de 1 à 4 atomes de chlore,
* des radicaux aryles, alkyaryles et ayant de 6 à 8 atomes de carbone et pouvant contenir de 1 à 4 atomes de chlore,
* des radicaux cyanoalkyle ayant de 3 à 4 atomes de carbone ;
ces radicaux étant éventuellement substitués notamment par des halogènes et/ou des alcoxyles, des groupes : méthyle ; éthyle ; propyle ; isopropyle ; butyle ; isobutyle ; n-pentyle ; t-butyle ; chlorométhyle ; dichlorométhyle ; α-chloroéthyle; α,ß-dichloroéthyle; ß-cyanoéthyle ; γ-cyanopropyle, phényle : p-chlorophényle ; m-chlorophényle ; dichloro-3,5 phényle ; trichlorophényle ; tétrachlorophényle ; o-, p- ou m-totyle ; xylyle comme diméthyl-2, 3-phényle, diméthyl-3, 4-phényle, étant préférés ; les radicaux méthyles et phényles étant particulièrement préférés.

Par "enduction à grande vitesse", on désigne des vitesses supérieures ou égales à 100 m/min, de préférence à 300 m/min, e.g. comprises entre 500 et 1000 m/min.

### Description détaillée de l'invention

### La composition

Avantageusement, cette composition est :
- du type de celles réticulables par un mécanisme de polyaddition impliquant des motifs Si-H et Si-IE avec IE représentant un groupement comportant au moins une insaturation éthylénique, de préférence vinylique, les motifs Si-IE appartenant à au moins un polyorganosiloxane A (POS-A-) porteur, par molécule; d'au moins deux motifs Si-IE, le ou les POS -A- constituant une base polymère BP propre à réagir avec un réticulant R dans lequel les motifs Si-H appartiennent à au moins un polyorganosiloxane B (POS-B-), en présence d'un catalyseur métallique -D-,
- ou du type de celles réticulables par voie cationique et/ou radicalaire, par l'intermédiaire de groupements fonctionnels de réticulation GFR comprenant au moins une fonction éthyléniquement insaturée - avantageusement acrylate et/ou alcényléther - et/ou époxyde et/ou oxéthane, ces GFR appartenant à au moins un polyorganosiloxane C* (POS-C*-) formant une base polymère BP* et porteur, par molécule; d'au moins deux motifs Si-GFR et en présence d'une quantité efficace de système amorceur -D*- cationique ou radicalaire.

Suivant une caractéristique remarquable de l'invention, la composition est préparée en mélangeant l'additif (ou empâtage) avec la base silicone (BP ou BP*), ledit mélange s'effectuant éventuellement de manière progressive et avec ou sans prédilution dans une huile silicone fluide composant la base silicone BP (de préférence huile alcénylée, e.g. vinylée ou Si-H) ou BP*.

La préparation de l'additif (ou empâtage) qui est une suspension concentrée de charges particulaires dans une ou plusieurs huiles silicones réactives ou non, est délicate. On cherche à obtenir un empâtage qui soit une dispersion homogène ayant une fine distribution des particules dans la matrice silicone, dont la rhéologie soit adaptée aux contraintes de manipulation (processabilité) et qui procure à la composition selon l'invention les propriétés d'accrochage/cohésion mécanique/réactivité recherchées.

Il est donc apparu souhaitable conformément à l'invention de préparer dans un premier temps l'additif (ou empâtage), puis de l'incorporer dans un second temps dans la composition selon l'invention.

Cet empâtage peut être pré-dispersé dans une huile silicone (par exemple vinylée) fluide, c'est-à-dire ayant une viscosité par exemple inférieure à 1.000 mPa.s à 25°C, ou directement introduit lors de la constitution du bain (donc juste avant enduction).

Suivant une variante, la charge particulaire, de préférence nanométrique, pourrait être introduite séparément de l'huile silicone avec laquelle elle est destinée à former l'additif (ou empâtage) au sein de la composition de bain silicone liquide d'enduction.

### L'additif (ou empâtage)

De préférence, l'huile silicone (II) et l'éventuelle huile silicone (III) de l'additif (ou empâtage) comprend au moins un POS-E- apte à réagir avec le réticulant R et/ou au moins un POS -E*- apte à réagir avec au moins un POS-C*-.

De préférence, l'additif (ou empâtage) comprend :
- 100 parties en poids d'huile silicone (II) et éventuellement (III);
- 0 à 5 parties en poids d'eau;
- 20 à 80 (de préférence 25 à 40, et, plus préférentiellement encore de l'ordre de 30 +/- 2) parties en poids de charge particulaire constituée par de la silice et/ou les charges siliceuses semi-renforçantes, telles que des terres de diatomées ou du quartz broyé; ces charges non siliceuses utilisables seules ou en mélange telles que le noir de carbone, le dioxyde de titane, l'oxyde de magnésium, l'oxyde d'aluminium, l'alumine hydratée,le silicate d'aluminium ou de magnésium, l'argile naturelle type bentonite ou montmorillonite, la vermiculite expansée, la vermiculite non expansée, le carbonate de calcium, l'oxyde de zinc, le mica, le talc, l'oxyde de fer, le sulfate de baryum, la chaux éteinte, les terres de diatomées, le quartz broyé et le zircone broyé; les microsphères organiques expansibles dotées d'une paroi polymère (homopolymère ou copolymère par exemple préparés à partir de monomères chlorure de vinyle, chlorure de vinylidène, acrylonitrile, méthacrylate de méthyle ou styrène ou mélanges de polymères et/ou copolymères, par exemple, notamment de copolymères acrylonitrile/méthacrylonitrile, copolymère acrylonitrile /chlorure de vinylidène), cette paroi renfermant un liquide ou un gaz (alcane tel que isobutane ou isopentane); les fibres synthétiques ou naturelles (polymères) broyées ;

- 1 à 20 parties en poids d'agent de compatibilisation sélectionné parmi :
   - les silazanes, de préférence parmi les disilazanes;
   - les (cyclo)siloxanes hydroxylés di ou de préférence monofonctionnels;
   - les amines, de préférence l'ammoniaque et/ou les alkylamines, la diéthylamine étant particulièrement préférée ;
   - les acides organiques, les acides formique et/ou acétique étant préférés ;
   - les chlorosilanes,
   - des composés organosiliciques tels que des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234)
   - et leurs mélanges ;
l'hexaméthyldisilazane (HMDZ) et/ou l'octaméthylcyclotétrasiloxane, associé ou non au divinyltétraméthyl-disilazane (VNM), étant particulièrement préféré.

La charge particulaire, de préférence nanométrique, est traitée avantageusement chimiquement par des agents de compatibilisation tels que ceux visés ci-dessus (par exemple silanes) et/ou thermiquement.

Les charges et en particulier les charges siliciques peuvent être par exemple des silices de combustion traitées à l'hexaméthyldisilazane ou à l'octaméthylcyclo-tétrasiloxanes (surface spécifique 300 m²/g).

Ces charges peuvent être minérales ou non, e.g. fibre synthétique ou naturelle (polymères) broyés, carbonate de calcium, talc, argile, dioxyde de titane... Enfin les charges peuvent être constituées de silice colloïdale formée par hydrolyse/condensation de silicates de métaux alcalins ou d'alkyles (de préférence méthyle ou éthyle) finement dispersée dans l'huile silicone.

Suivant l'invention, la silice est privilégiée en tant charge particulaire, de préférence nanométrique, et en particulier la silice de pyrogénation (ou de combustion), de surface spécifique BET comprise entre 50 et 400 m²/g et un diamètre moyen compris entre 5 et 500 nm, de préférence entre 5 et 50 nm, et, plus préférentiellement encore, entre 10 et 20 nm.

La surface spécifique BET est déterminée selon la méthode de BRUNAUER, EMMET, TELLER décrite dans "The Journal of the American Chemical Society, vol. 80, page 309 (1938)" correspondant à la norme NFT 45007 de novembre 1987.

Suivant une variante avantageuse, la silice retenue peut être une silice colloïdale, préparée par hydrolyse/condensation de silicate de métaux alcalins ou d'alkyle (de préférence méthyle ou éthyle), très finement dispersée dans une huile silicone, de préférence fonctionnelle, et plus préférentiellement encore porteuse de motifs ≡Si-IE', avec IE' répondant à la même définition que celle donnée pour IE.

Par "très finement dispersée dans une huile silicone", on entend par exemple une dispersion comparable à celle du produit commercial de marque "NANOCONES^{®}" de la société HANSE CHEMIE, en termes de finesse ou d'homogénéité de dispersion.

Concernant la préparation de l'additif (ou empâtage), le mélange huile/charge est réalisé à l'aide de dispositifs connus et appropriés. Il peut s'agir par exemple : de mélangeurs à bras, mélangeurs internes, mélangeurs planétaires, mélangeurs à pales en soc de charrue, mélangeurs à double arbre co- ou contrarotatif, mélangeurs-extrudeurs continus, ou d'autres dispositifs discontinus ou continus. Pour plus de détails, on se reportera par exemple aux demandes WO-A-98/58997, WO-A-02/44259 & WO-A-02/18506.

Un mode préféré de réalisation parmi d'autres peut être obtenu avec des empâtages de LSR, constitués d'une silice pyrogénée pré-dispersée dans des huiles silicones vinylées visqueuses et traitées in situ avec de l'HMDZ et /ou du VMN. Les LSR sont des compositions élastomères silicones vulcanisables à chaud "Liquid Silicone Rubber", par des réactions de polyaddition (hydrosilylation), impliquant des polyorganosiloxanes (en l'occurrence des POS-E-) porteurs de motifs =Si-IE, c'est-à-dire d'insaturation(s) éthylénique(s) et/ou acétylénique(s),et des POS à motifs ≡Si-H (en l'occurrence des POS-E- et/ou -B-), en présence d'un ensemble catalytique comprenant au moins un catalyseur métallique (de préférence à base de platine) et éventuellement au moins un inhibiteur. Ces compositions LSR peuvent être du type mono ou bicomposant.

S'agissant de l'eau de la dispersion, elle sert à la réaction à la réaction de compatibilisation entre l'agent de compatibilisation et la charge particulaire (par exemple du silazane ou de l'alcoxysilane avec la silice). Il est préférable que l'eau résiduelle soit la plus limitée possible, et plus préférentiellement encore, soit inexistante au terme de la préparation de l'additif.

### Silicones de la base polymère BP, de l'huile de l'additif (ou empâtage) et du réticulant R POS-A- & -E-

De manière remarquable, le ou les POS -A- de la base BP ainsi que le ou les POS - E- de l'huile silicone (II) -voire (III)- de l'additif (ou empâtage) est/sont choisi(s) dans le groupe des POS comprenant :
◆ des motifs siloxyles de formule :

   R¹ₙSiO_{4-n/2} (1)
◆ des motifs siloxyles de formule :

   ZₓR¹_{y}SiO_{4-x-y/2} (2)
formules dans lesquelles les divers symboles ont les significations suivantes :
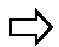 les symboles R¹, identiques ou différents, représentent chacun un groupement de nature hydrocarbonée non hydrolysable, ce radical pouvant être :
   * un radical alkyle ayant de 1 à 5 atomes de carbone et pouvant comporter de 1 à 6 atomes de chlore;
   * des radicaux cycloalkyles ayant de 3 à 8 atomes de carbone et pouvant contenir de 1 à 4 atomes de chlore;
   * des radicaux aryles, alkyaryles et ayant de 6 à 8 atomes de carbone et pouvant contenir de 1 à 4 atomes de chlore;
   * des radicaux cyanoalkyle ayant de 3 à 4 atomes de carbone; ces radicaux étant éventuellement substitué notamment par des halogènes et/ou des alcoxyles;
      les groupes méthyle ; éthyle ; propyle ; isopropyle ; butyle ; isobutyle ; n-pentyle ; t-butyle ; chlorométhyle ; dichlorométhyle ; α-chloroéthyle; α,ß-dichloroéthyle;
      ß-cyanoéthyle ; γ-cyanopropyle, phényle : p-chlorophényle;
      m-chlorophényle ; dichloro-3,5 phényle ; trichlorophényle; tétrachlorophényle ; o-, p- ou m-totyle ; xylyles comme diméthyl-2, 3-phényle, diméthyl-3, 4-phényle, étant préférés ; les radicaux méthyles et phényles étant particulièrement préférés;
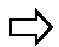 les symboles Z, représentant un groupe IE alcényle en C₂-C₆ (de préférence vinyle);
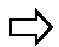 n = un nombre entier égal à 0, 1, 2 ou 3;
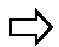 x = un nombre entier égal à 0, 1, 2 ou 3;
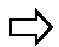 y = un nombre entier égal à 0, 1 ou 2;
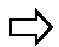 la somme x + y se situe dans l'intervalle allant de 1 à 3;
au moins 60% voire au moins 85% des groupements R² représentant de préférence, des groupements méthyles;
les POS particulièrement préférés étant des (co)polymères statistiques de type M^{Vi}(D)ₚ M^{Vi}, M^{Vi} (D)_{p'}(D^{Vi})_{q'} M^{Vi}, M (D)_{p"}(D^{Vi})_{q"} M , M (D^{Vi})_{q"'} M, avec p, p', p", q, q', q" , q"'correspondant à des nombres entiers, avec p, p' et p" étant compris entre 10 et 1000 et q, q', q", q"' étant compris entre 1 et 50, ces (co)polymères étant éventuellement branchés.

Quand ils sont branchés, ces (co)polymères POS particulièrement préférés sont avantageusement légèrement branchés, c'est-à-dire qu'ils contiennent en moyenne par exemple un ou plusieurs motifs T et/ou Q.

Comme exemples de motifs siloxyles de formule (2) constituant le POS, on peut citer : vinyldiméthylsiloxyle, vinylphénylméthylsiloxyle, vinylméthylsiloxyle et vinylsiloxyle.

Les motifs diméthylsiloxyle, méthylphénylsiloyle, diphénylsiloxyle, méthyl-siloxyle et phénylsiloxyle sont des exemples de motifs siloxyle de formule (1) du POS.

Des exemples de POS sont des composés linéaires et cycliques comme :
∘ les diméthylpolysiloxanes à extrémités diméthylvinylsilyle,
∘ les copolymères (méthylvinyle)(diméthyl)polysiloxanes à extrémités triméthyl-silyles,
∘ les copolymères(méthylvinyle)(diméthyle)polysiloxanes à extrémités diméthyl-vinylsilyles,
∘ ou les méthylvinylpolysiloxanes cycliques.

Le POS-A- ou -E- peut présenter une structure linéaire, branchée ou cyclique. Son degré de polymérisation est, de préférence, compris entre 10 et 10.000.

Conformément à l'invention, il est parfaitement envisageable de mettre en oeuvre un mélange de différents POS-A- ou -E- à motifs de formule (1) et (2), tels que définis ci-dessus (linéaires et/ou cycliques).

Avantageusement, la base silicone comprend au moins un polyorganosiloxane POS, le ou les POS de la base silicone (BP) sont choisis parmi les polyorganosiloxanes POS ayant une viscosité η en mPa.s à 25°C telle que :
→ 50 ≤ η ≤ 100.000
→ de préférence 100 ≤ η ≤ 10.000
→ et, plus préférentiellement encore 150 ≤ η ≤ 2.000.

En particulier, le ou les POS -A- de la base silicone BP sont de préférence choisis parmi les POS ayant une viscosité ηA en mPa.s à 25°C telle que :
→ 50 ≤ ηA < 100.000
→ de préférence 100 ≤ ηA < 10.000
→ et, plus préférentiellement encore 150 ≤ ηA < 2.000.

Il est avantageux que le ou les POS -E- de l'huile silicone de l'additif (ou empâtage) sont choisis parmi les huiles ayant une viscosité ηE en mPa.s à 25°C telle que dans l'ordre croissant de préférence :
→ 200 ≤ ηE ≤ 2.000.000
→ 1.000 ≤ ηE ≤ 500.000
→ 10.000 ≤ ηE ≤ 200.000
→ 10.000 ≤ ηE ≤ 30.000
→ 15.000 ≤ ηE ≤ 30.000
étant entendu que, conformément à l'invention, la viscosité ηII de l'huile (II) et ηIII de l'éventuelle huile (III) sont telles que définies ci-avant.

Le nombre et motifs ≡SiIE (IE étant de préférence un alcényle et plus préférentiellement encore un vinyle) par molécule de POS -A- ou -E- est de préférence, supérieur ou égal à 2. Cela peut représenter notamment de 0,01% à 10% (de préférence 0,1 à 2%) de IE en poids par molécule de POS -A- ou -E-.

### POS-B-

De préférence, le ou les POS -B- du réticulant R est/sont choisis dans le groupe des POS comprenant :
◆ des motifs siloxyles de formule :

   R²ₙSiO_{4-n/2} (3)
◆ et des motifs siloxyles de formule :

   HR²_{w}SiO _{4-w/2} (4)
formules dans lesquelles les divers symboles ont la signification suivante :
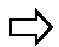 les symboles R², identiques ou différents, répondent à la même définition donnée ci-dessus pour R^{1;}
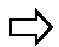 n = un nombre entier égal à 0, 1, 2 ou 3;
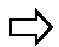 w = un nombre entier égal à 0, 1, 2 ou 3;
au moins 60% voire au moins 85% des groupements R² représentant de préférence, des groupements méthyles;
les POS de type M(D^{H})ᵤM, M(D)ᵥ(D^{H})_{u'}M , M^{H}(D)_{w}(D^{H})_{u"}M^{H} , M^{H}(D)ₓ(D^{H})_{u"'}M , avec u, v, w, x, u', u", u"', v, v' correspondant à des nombres entiers compris entre 10 à 60 pour u, u' et u"', et 10 à 300 pour v, w et x , étant particulièrement préférés.

Comme autres exemples de réticulants, on peut se reporter à ceux divulgués notamment dans les demandes FR-A-2 832 413 & FR-A-2 833 963.

Plus généralement, le POS-B- est avantageusement choisi parmi les homopolymères et les copolymères linéaires, cycliques ou en réseau présentant en moyenne, par molécule, de préférence au moins 3 atomes d'hydrogène liés à des atomes de silicium différents et dont les radicaux organiques liés aux atomes de silicium sont choisis parmi les radicaux méthyle, éthyle ; 60% molaire au moins de ces radicaux (et de préférence la totalité de ces radicaux) étant des radicaux méthyle.

Des exemples de motifs siloxyles composant le POS B sont H(CH₃)₂SiO_{1/2}, H(CH₃)SiO_{2/2}, H(C₆H₅)SiO_{2/2}.

A titre d'exemples de POS-B-, on peut citer :
- les diméthylpolysiloxanes à extrémités hydrogénodiméthylsilyles,
- les copolymères à motifs (diméthyl)-(hydrogénométhyl) polysiloxanes à extrémités triméthylsilyles,
- les copolymères à motifs (diméthyl)(hydrogénométhyl) polysiloxanes à extrémités hydrogénodiméthylsilyles,
- les copolymères méthylhydrogéno-méthyloctylsiloxanes
- les (hydrogénométhyl)polysiloxanes à extrémités triméthylsilyles,
- les (hydrogénométhyl)polysiloxanes cycliques,
- M^{H}(D)ᵤM^{H}: les diméthylpolysiloxanes à extrémités hydrogénodiméthylsilyle,
- M(D)ᵥ(D^{H})_{u'}M: les copolymères à motifs diméthylhydrogénométhylpoly-siloxanes à extrémités triméthylsilyle,
- M^{H}(D)_{w}(D^{H})_{u"}M^{H}: les copolymères à motifs diméthylhydrogénométhylpoly-siloxanes à extrémités hydrogénodiméthylsilyle,
- M(D^{H})ᵤM : les hydrogénométhylpolysiloxanes à extrémités triméthylsilyle,
- D^{H}₄ : les hydrogénométhylpolysiloxanes cycliques.

Suivant une variante, l'huile silicone de l'additif (ou empâtage) pourrait contenir outre les POS -E-, de préférence réactifs avec le réticulant R, des POS -E¹- répondant à la même définition que les POS -B- du réticulant R.

Le nombre de motifs ≡SiH par molécule de POS -B- est de préférence supérieur ou égal à 2. Cela peut notamment représenter de 0,001 % à 5 % (de préférence 0,05 à 2 %) d'hydrogène en poids pour le POS -B-.

De préférence, le ou les POS -B- de la base BP sont choisis parmi les huiles ayant une viscosité ηB en mPa.s à 25°C telle que :
→ 50 ≤ ηB < 100.000
→ de préférence 100≤ ηB < 10.000
→ et, plus préférentiellement encore 150 ≤ ηB < 2.000

Suivant une caractéristique remarquable de l'invention, la viscosité ηB du ou des POS B correspond à la viscosité ηR du réticulant R.

Avantageusement, le ou les POS -B- du réticulant R sont choisis parmi les POS de type M(D)ᵥ(D^{H})_{u'}M ,
→ avec 20 ≤ u' ≤ 80
→ de préférence 40 ≤ u' ≤ 60
→ 20 ≤ v ≤ 50
→ de préférence 30 ≤ v ≤ 40

Suivant une caractéristique intéressante de l'invention, le ou les POS -B- du réticulant R sont préférablement choisis parmi les POS dans lesquels le nombre de moles de Si-H pour 100 g d'huile B est compris entre 0,30 et 1, de préférence entre 0,30 et 0,95.

De préférence, dans le cas où la base silicone est une base silicone comprenant au moins une huile silicone comprenant des motifs ≡Si-alcényle (de préférence ≡Si-vinyle(Vi)) et au moins un réticulant R comprenant des motifs =Si-H aptes à réagir ensemble par polyaddition, le ratio molaire ≡Si-H /≡Si-alcényle (Vi), au regard de la base silicone (BP) additionnée de l'additif, y inclus le réticulant R, est tel que :
1,0 ≤ ≡Si-H /≡Si-alcényle(Vi) ≤ 5
de préférence 1,4 ≤ ≡Si-H /≡Si-alcényle(Vi) ≤ 4.

Les bases BP, les POS-E- et les réticulants R des compositions silicones réticulables par polyaddition selon l'invention peuvent ne comporter que des POS linéaires comme, par exemple, celles décrites dans les brevets : US-A-3 220 972, US-A-3 697 473 et US-A-4 340 709.

Mais, il est aussi parfaitement envisageable de mettre en oeuvre un mélange de différents POS-A-, -E- à motifs de formule (1) et (2) ou B ou E¹ à motifs de formule (3) et (4) tels que définis ci-dessus (linéaires et/ou cycliques). ****

### Catalyseur métallique -D- de polyaddition

Les catalyseurs -D- sont également bien connus. On utilise, de préférence, les composés du platine et du rhodium. On peut, en particulier, utiliser les complexes du platine et d'un produit organique décrit dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur -D-, calculée en poids de platine-métal, est généralement comprise entre 2 et 400 ppm, de préférence entre 5 et 200 ppm basée sur le poids total des polyorganosiloxanes POS-A-, -E- et -B-.

L'utilisation selon l'invention de réticulants R comprenant des POS-B- ≡Si-H judicieusement sélectionnés permet de réaliser, avec de faibles taux de platine donc économiquement, des revêtements anti-adhérents sur des supports souples. Grâce à l'invention une réticulation correcte du revêtement est assurée à des taux de platine inférieurs à 80 ppm, de préférence de l'ordre de 60 ppm, et idéalement de 40 ppm, par exemple, et ce dans des conditions industrielles d'enduction, e.g. à une température d'activation thermique de 150°C.

### Silicones de la base polymère BP* et de l'huile de l'additif (ou empâtage)

### POS-C*- & -E*-

De manière remarquable, le ou les POS-C*- de la base BP ainsi que le ou les POS-E*- de l'huile silicone de l'additif (ou empâtage) est/sont choisi(s) est/sont choisi(s) dans le groupe des POS comprenant les époxysilicones et/ou des vinyléthersilicones qui sont :
→ soit linéaires ou sensiblement linéaires et constitués de motifs de formule (1), terminés par des motifs de formules (3.1) et (3.2),
→ soit cycliques et constitués par des motifs de formule (3.1),
   avec (3.1) et (3.2) répondant aux formules suivantes : 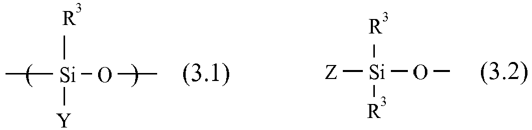 dans lesquelles :
   - les symboles R³ sont semblables ou différents et répondent à la même définition donnée ci-dessus pour R¹; au moins 60% voire au moins 85% des groupements R³ représentant de préférence, des groupements méthyles;
   - les symboles Y sont semblables ou différents et représentent :
      - soit le radical R³,
      - soit un groupement GFR correspondant à un reste époxyde ou vinyléther relié au silicium par l'intermédiaire d'un radical divalent contenant, avantageusement, de 2 à 20 atomes de carbone comportant, éventuellement, un hétéroatome,
l'un au moins des symboles Y correspondant à un groupement GFR.

Comme exemples de groupements organofonctionnels GFR du type époxy, on peut citer ceux de formule suivante :

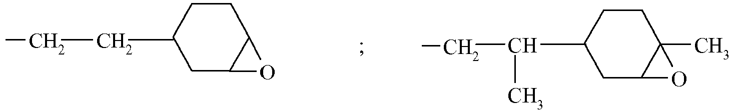

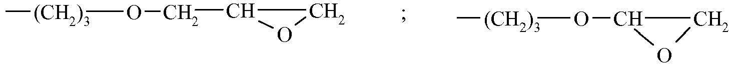

S'agissant des groupements organofonctionnels GFR du type vinyléther, on peut mentionner, e. g., ceux contenus dans les formules suivantes : 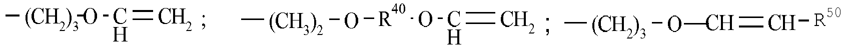 avec R⁴⁰ étant :
- un alkylène linéaire ou ramifié en C₁-C₁₂, éventuellement substitué,
- ou arylène, de préférence phénylène, éventuellement substitué, de préférence par un à trois groupements alkyles en C₁-C₆;
et avec R⁵⁰ = alkyle linéaire ou ramifié en C₁-C₆.

Les polyorganosiloxanes POS-C*- & -E*- époxy ou vinyloxyfonctionnels préférés sont décrits notamment dans les brevets DE-A-4 009 889 ; EP-A-0 396 130 ; EP-A-0 355 381 ; EP-A-0 105 341 ; FR-A-2 110 115 ; FR-A-2 526 800.

Les polyorganosiloxanes époxy fonctionnels peuvent être préparés par réaction d'hydrosilylation entre des huiles à motifs Si-H et des composés époxyfonctionnels, tels que vinyl-4 cyclohexèneoxyde, allylglycidyléther...

Les polyorganosiloxanes vinyloxyfonctionnels peuvent être préparés par réaction d'hydrosilylation entre des huiles à motifs Si-H et des composés vinyloxyfonctionnels, tels que l'allylvinyléther, l'allyl-vinyloxyéthoxybenzène...

Plus préférentiellement encore, les POS -C*- & -E*- sont des époxysilicones de formules (5) (6) suivantes : 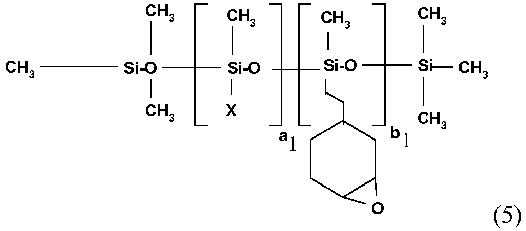 avec X = CH₃ ; phényle ; cycloalkyle ; alkyle C₁-C₁₈ ; alcényle ; -OH; H ; CH₂-CH₂-CH₂-OH ; CH₂-CH₂-CF₃ ; -(CH₂)ₙ-CF₃, n = 1 à 20 ; 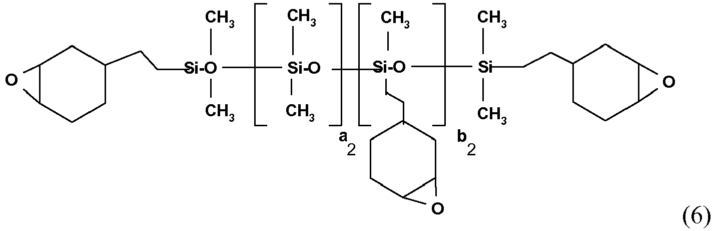
- a₁, a₂ et b₁, b₂ étant définis comme suit dans ces formules (5) et (6)
   1 ≤ a₁, a₂ 1 ≤ b₁, b₂
   de préférence 1 ≤ a₁, a₂ ≤ 5 000 1 ≤ b₁, b₂ ≤ 500
   et plus préférentiellement encore 1 ≤ a₁, a₂ ≤ 1 000 1 ≤ b₁, b₂ ≤ 100 ;
- a₂, b₂ étant = 0 dans la formule (6) pour donner un disiloxane époxydé (7).

Il est avantageux que le ou les POS -E*- de l'huile silicone de l'additif (ou empâtage) sont choisis parmi les huiles ayant une viscosité ηE* en mPa.s à 25°C telle que dans l'ordre croissant de préférence :
→ 200 ≤ ηE* ≤ 2.000.000
→ 1.000 ≤ ηE* ≤ 500.000
→ 10.000 ≤ ηE* ≤ 200.000
→ 10.000 ≤ ηE* ≤ 30.000
→ 15.000 ≤ ηE* ≤ 30.000
étant entendu que, conformément à l'invention, la viscosité ηII de l'huile (II) et ηIII de l'éventuelle huile (III) sont telles que définies ci-avant.

### Système amorceur -D*- de réticulation par voie cationique ou radicalaire

De préférence, le système amorceur cationique comprend comme amorceur thermique et/ou photoamorceur, un produit choisi parmi les sels d'onium d'un élément des groupes 15 à 17 de la classification périodique [Chem & Eng. News, vol. 63, N° 5, 26 du 4 février 1985] ou d'un complexe organométallique d'un élément des groupes 4 à 10 de la classification périodique [même référence] appartenant à une famille spécifique de photoamorceur du type de ceux décrits dans la demande de brevet français N° 96 16237. De tels photoamorceurs permettent une photoréticulation rapide et complète du vernis.

Suivant une caractéristique préférée de l'invention, les amorceurs C sont e.g. : les borates d'onium décrits dans la demande de brevet européen N° 0 562 922, dont le contenu intégral est inclus par référence dans la présente demande. Plus précisément encore, on peut mettre en oeuvre en pratique l'amorceur de formule suivante :

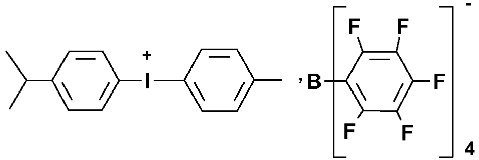

En pratique, les amorceurs de l'utilisation suivant l'invention sont préparés de manière très simple par dissolution du borate d'onium ou de complexe organométallique, de préférence d'onium, se présentant sous forme solide (poudre) dans un solvant.

Selon une alternative concernant le borate d'onium, ce dernier peut être préparé directement dans le solvant, à partir d'un sel (e.g. chlorure) du cation (iodonium) et d'un sel (par exemple de potassium) de l'anion borate.

De préférence, il est prévu conformément à l'utilisation selon l'invention que l'amorceur -D*- est employé en solution dans un solvant organique, de préférence choisi parmi les solvants donneurs de protons et plus préférentiellement encore parmi le groupe suivant : alcool isopropylique, alcool benzylique, diacétone-alcool, lactate de butyle, esters, et leurs mélanges. Comme cela est revendiqué dans le brevet français N° 2724660, les solvants organiques donneurs de protons et à caractère aromatique (alcool benzylique), se comportent comme des accélérateurs de réticulation. Il est donc avantageux de s'en servir pour mettre en solution, le photoamorceur.

Il convient de préciser que par quantité catalytique efficace de -D*-, on entend, au sens de l'invention, la quantité suffisante pour amorcer la réticulation.

Dans la mesure où en pratique, - comme indiqué supra -, le photoamorceur ou photoinitiateur est avantageusement dissous dans un solvant polaire, en quantité telle que son titre dans la solution obtenue soit compris entre 1 et 50 % en poids, de préférence entre 10 et 30 % en poids, et plus préférentiellement encore entre 15 et 25 % en poids.

Selon une modalité avantageuse de l'utilisation selon l'invention, l'incorporation du -D*- en solution dans la composition comprenant les POS-C*- et -E*- à teneur molaire en GRF donnée, se fait à raison de 0,1 à 10 % en poids de solution par rapport au mélange final de la composition, de préférence 0,5 à 5 % en poids et plus préférentiellement de l'ordre de 1 % en poids.

Selon une variante de l'invention, on peut mettre en oeuvre en plus du système amorceur -D*- des inhibiteurs de réticulation, de préférence choisis parmi les produits alcalins, et plus préférentiellement encore parmi les produits alcalins de type aminé, par exemple du type de ceux consistant en un silicone sur lequel est greffé au moins un groupement amine, de préférence tertiaire.

S'agissant des autres additifs facultatifs pouvant être associés à -D*-, on peut citer des diluants réactifs tels que les composés de formule époxyde, vinyléther et oxéthane :

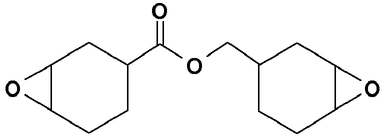

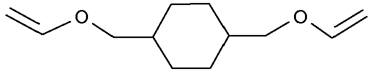

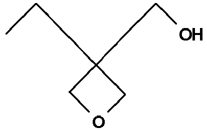

Les éventuels pigments inorganiques ou organiques peuvent aussi être ajoutés à - D*-. A titre d'exemples de pigments, on peut citer le noir de carbone ; le dioxyde de titane ; la phtalocyanine ; la benzimidazolone ; les naphtols (BONA pigment lakes) ; les diazopyrazolones ; les pigments jaunes diarylides ou monoarylides.

Les éventuels photosensibilisateurs sont envisageables pour compléter le système. Ils peuvent être sélectionnés parmi les produits (poly)aromatiques -éventuellement métalliques- et les produits hétérocycliques, et de préférence dans la liste de produits suivants : phénothiazine, tétracène, pérylène, anthracène, diphényl-9,10-anthracène, thioxanthone, benzophénone, acétophénone, xanthone, fluorénone, anthraquinone, 9,10-diméthylanthracène, 2-éthyl-9,10-diméthyloxyanthracène, 2,6-diméthyl-naphtalène, 2,5-diphényl-1-3-4-oxadiazole, xanthopinacol, 1,2-benzanthracène, 9-nitro-anthracène, et leurs mélanges.

Plus spécialement, il peut s'agir d'un produit à base de thioxanthone :

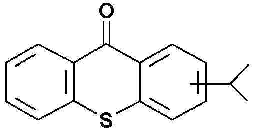

Compte tenu de sa facilité d'obtention de son faible coût et de ses propriétés antifriction, le vernis silicone selon l'invention est susceptible d'avoir des débouchés dans de nombreux domaines d'application et en particulier dans le domaine de l'enduction des supports fibreux tissés ou non.

### Viscosités de la base polymère, de l'additif (ou empâtage) et du réticulant R

La viscosité est un paramètre important de la composition selon l'invention. Ainsi, selon d'autres caractéristiques avantageuses de l'invention:
- la base polymère a une viscosité ηBP en mPa.s à 25°C telle que :
   → 50 ≤ ηBP < 100 000
   → de préférence 100 ≤ ηBP < 5000
   → et, plus préférentiellement encore 100 ≤ ηBP < 1.000.
- et/ou l'additif (ou empâtage) a une viscosité ηADD en mPa.s à 25°C telle que:
   → 1 000 ≤ ηADD < 1 000 000
   → de préférence 20 000 ≤ ηADD < 500 000
   → et, plus préférentiellement encore 20 000 ≤ ηADD < 100 000.

### Autres ingrédients

De préférence, la composition selon l'invention comprend en outre au moins l'un des ingrédients suivants:
F. au moins un ingrédient d'accrochage, de préférence choisi parmi les silanes et/ou silicones époxydés ou acryliques;
G. au moins un système modulateur d'adhérence comprenant au moins une résine silicone de préférence choisie parmi les résines MQ, MQOH, MDViQ, MMVi, MMViQ ou leurs mélanges;
H. au moins un ingrédient anti-brouillard;
I. au moins une gomme silicone hydroxylée ou non;
J. au moins une gomme silicone vinylée ou non;
K. au moins un agent inhibiteur d'hydrosilylation, de préférence choisi parmi les alcools acétyléniques et/ou les diallylmaléates et leurs dérivés;
L. au moins un autre ingrédient choisi parmi les bactéricides, et/ou les agents antigels ou de mouillage, les anti-mousses, ou les charges, et/ou les latex synthétiques, et/ou les colorants, et/ou les acidifiants.

### Ingrédient d'accrochage F:

Comme exemples de tels additifs, on peut citer des composés organiques ou silicones comme par exemple des silicones à fonctions époxydes ou acryliques.

A titre indicatif, les quantités susceptibles d'être mises en oeuvre sont comprises entre 0,5 et 5% en poids de la composition selon l'invention, qui est avantageusement un bain formulé.

### Système modulateur d'adhérence G

Le système modulateur d'adhérence G peut être avantageusement sélectionné parmi les systèmes connus. Il peut s'agir de ceux décrits dans le brevet français FR-B-2 450 642, le brevet US-B-3 772 247 ou la demande de brevet européen EP-A-0.601.938.

A titre d'exemples, on peut citer les modulateurs à base :
o de 96 à 85 parties en poids d'au moins une résine polyorganosiloxane réactive de type : MD^{Vi}Q, MM^{Vi}Q, MD^{Vi}T, MM^{Héxényle}Q, ou MM^{Allyloxypropyle}Q,
o de 4 à 15 parties en poids d'au moins une résine non réactive de type: MD'Q, MDD'Q, MDT', MQ, ou MDQ.

A titre indicatif, les quantités de G susceptibles d'être mises en oeuvre sont comprises entre 1 et 70% poids de la composition selon l'invention, qui est avantageusement un bain formulé.

### Ingrédient anti-brouillard H

Comme exemples de tels ingrédients, on peut citer des composés organiques ou silicones qui peuvent être des structures branchées ou des formulations avec des charges types silices ou autres.

A titre indicatif, les quantités de H susceptibles d'être mises en oeuvre sont comprises entre 1 et 20 % poids de la composition selon l'invention, qui est avantageusement un bain formulé.

### Gomme silicone hydroxylée ou non I

Comme exemples de telles gommes, on peut citer des gommes organiques ou silicones à fonctions hydroxylées. Ces fonctions pourront se trouver dans la chaîne, en bout de chaines ou les deux.

A titre indicatif, les quantités de I susceptibles d'être mises en oeuvre sont comprises entre 5 et 70% poids de la composition selon l'invention, qui est avantageusement un bain formulé.

### Gomme silicone vinylée ou non J

Comme exemples de telles gommes, on peut citer des gommes silicones vinylées qui peuvent contenir des vinyles dans la chaine ou en bout de chaines ou les deux.

A titre indicatif, les quantités de J susceptibles d'être mises en oeuvre sont comprises de préférence entre 5 et 70 % poids du bain formulé.

### Agent inhibiteur d'hydrosilylation K

L'inhibiteur de réticulation K (ralentisseur de la réaction d'addition et stabilisant de la durée de vie du bain catalysé) peut, quant à lui, être choisi parmi les composés suivants :
- polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les maléates alkylés ou encore allylés,
- et les alcools acétyléniques.

Ces alcools acétyléniques, (cf. FR-B-1 528 464 et FR-A-2 372 874), qui font partie des bloqueurs thermiques de réaction d'hydrosilylation préférés, ont pour formule :

R¹⁰⁰ - (R²⁰⁰) C(OH) - C = CH

formule dans laquelle :
- R¹⁰⁰ est un radical alkyle linéaire ou ramifié, ou un radical phényle ;
- R²⁰⁰ est H ou un radical alkyle linéaire ou ramifié, ou un radical phényle ;
les radicaux R¹⁰⁰, R²⁰⁰ et l'atome de carbone situé en a de la triple liaison pouvant éventuellement former un cycle ;
le nombre total d'atomes de carbone contenu dans R¹⁰⁰ et R²⁰⁰ étant d'au moins 5, de préférence de 9 à 20.

Lesdits alcools sont, de préférence, choisis parmi ceux présentant un point d'ébullition supérieur à 250°C. On peut citer à titre d'exemples :
- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools α-acétyléniques sont des produits du commerce.

### Autres ingrédients L

Comme exemples de tels additifs, on peut citer des accélérateurs de la réaction d'hydrosilylation qui peuvent être par exemple des acides ou des bases organiques ou minérales.

A titre indicatif, les quantités de L susceptibles d'être mises en oeuvre sont comprises entre 0.001 et 5% poids de la composition selon l'invention, qui est avantageusement un bain formulé.

### Formes physico-chimiques de la composition

La composition liquide d'enduction selon l'invention peut être avec ou sans solvant (de préférence sans solvant) ou en émulsion aqueuse.

Dans le cas où la composition se présente sous forme d'émulsion/dispersion aqueuse, elle comporte alors au moins un tensioactif; et éventuellement au moins un agent de fixation du pH.

L'agent de fixation et de maintien du pH est, de préférence, un système tampon comprenant HCO₃⁻/CO₃²⁻ et/ou H₂PO₄⁻/HPO₄²⁻. Ainsi, pour obtenir l'effet tampon souhaité, il conviendra d'introduire conformément à l'invention un sel d'HCO₃⁻ et/ou H₂PO₄⁻ comme par exemple NaHCO₃ et/ou Na₂CO₃ et/ou NaH₂PO₄ et/ou Na₂ HPO₄. Il va de soi que tout autre sel à contre-cation différent (e.g. K) pourrait convenir. De manière particulièrement préférée, on met en oeuvre en pratique un système tampon constitué par du NaHCO₃ que l'on incorpore dans l'émulsion.

Le ou les tensioactifs susceptibles d'être présents dans l'émulsion suivant l'invention à titre d'agent d'émulsification, sont de nature non-ionique ou ionique.

Suivant une disposition intéressante, la proportion d'eau de l'émulsion est supérieure ou égale à 50 % en poids, de préférence supérieure ou égale à 55 % en poids et par exemple en pratique de l'ordre de 55 - 60 % en poids ou bien encore de 85 à 90 % en poids.

### Réticulation de la composition d'enduction

### Polyaddition

Selon l'invention, pour la réticulation du revêtement, le support enduit avec la composition silicone polyaddition est placé à une température supérieure ou égale à 110°C, de préférence comprise entre 110 et 250°C, et, plus préférentiellement encore comprise entre 130 et 170°C, pendant moins de 60 secondes, de préférence moins de 10 secondes.

### Voie cationique et/ou radicalaire

La composition d'enduction comprenant BP* et E* est aisément et industriellement réticulable par voie cationique et/ou radicalaire, par exposition à un faisceau d'électrons et/ou à un rayonnement actinique du type UV et/ou par activation thermique.

### Autres aspects de l'invention

### Composition et son usage

Un aspect de l'invention vise une composition telle que définie ci-dessus pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation de cette composition.

### Procédé de préparation d'un bain d'enduction

Un autre aspect de l'invention vise un procédé de préparation d'un bain d'enduction à base de la composition telle que définie ci-dessus, ce bain étant destiné à une machine d'enduction à grande vitesse, caractérisé en ce qu'il consiste essentiellement à mélanger les composants tels que définis supra.

### Support

Un autre aspect de l'invention vise un support revêtu d'un revêtement obtenu à partir de la composition tel que défini supra caractérisé qu'il est choisi parmi les supports souples en papier, carton ou analogue, les supports souples fibreux tissés ou non, les supports souples comportant du polyéthylène et/ou du polypropylène et/ou du polyester (e.g. PolyEsterTérephtalate PET) et/ou du polychlorure de vinyle, et/ou les supports souples imprimables thermiquement.

A titre d'exemples de supports, on peut citer des papiers de types divers (supercalendré, couché, glassine), cartons, feuilles de cellulose, feuilles en métal, films de matière plastique (polyester, polyéthylène, polypropylène...)

### L'utilisation d'un additif (empâtage/dispersion) silicone dans la composition liquide (bain) d'enduction

Un autre aspect de l'invention vise l'utilisation d'un additif (empâtage/dispersion) silicone comportant de 5 à 80, notamment de 10 à 50, et encore plus préférentiellement de 10 à 45 % en poids de charge particulaire, de préférence nanométrique, dans une huile silicone de préférence réactive, pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation d'une composition silicone liquide d'enduction à grande vitesse.

Cette utilisation permet de changer la composition liquide (bain) d'enduction pour améliorer le rub-off, sans porter préjudice à la réactivité. Cette composition silicone liquide d'enduction à grande vitesse est avantageusement celle selon l'invention telle que définie ci-dessus.

### Préparation de la composition liquide (bain) d'enduction

Selon un autre de ses aspects, la présente invention concerne un procédé de préparation de la composition silicone liquide, utilisable notamment comme base d'enduction pour la réalisation de revêtements anti-adhérents et hydrofuges, cette composition étant du type de celle définie ci-dessus et dans les revendications ci-après. Selon ce procédé, on mélange les composés tels que définis ci-avant.

De préférence:
a. on mélange au moins les huiles POS-A- à motifs =Si-IE (e.g. Vi) (de préférence linéaire) et/ou l'huile ou les huiles POS-E*- à motifs ≡Si-GFR formant la base polymère BP avec l'additif (ou empâtage), sous agitation mécanique, de préférence sous fort cisaillement;
b. dans la voie polyaddition, on introduit ensuite dans ce mélange BP/empâtage le réticulant R constitué par au moins une huile POS-B- à motifs =Si-H de type M(D)ᵥ(D^{H})_{u'}M et/ou par un mélange d'huiles comprenant des molécules POS (de préférence linéaires) porteuses chacune d'une partie des motifs M(D)ᵥ(D^{H})_{u'}M, contenus dans le réticulant R;
c. Le catalyseur -D- ou l'amorceur -D*- est également incorporé dans la phase silicone, avec les éventuels autres ingrédients F à L.

Les moyens et les méthodologies de mélange sont connus de l'homme de l'art, qu'il s'agisse de compositions avec/sans solvant ou d'émulsion.

### Procédé de production de revêtements silicones réticulés anti-adhérents_et/ou_hydrofuges, sur supports souples

L'invention vise également un procédé de production de revêtements silicones réticulés anti-adhérents et/ou hydrofuges, sur supports souples, consistant essentiellement à mettre en oeuvre la composition silicone liquide d'enduction selon l'invention telle que définie ci-dessus, dans une machine industrielle d'enduction à grande vitesse.

Les dispositifs utilisés sur les machines industrielles d'enduction du papier comprennent une tête d'enduction à cinq rouleaux et des systèmes à lames d'air ou à barre égalisatrice, permettant le dépôt de la composition liquide sur des supports ou matériaux souples. Le durcissement par réticulation est effectué e.g. par circulation dans des fours-tunnels chauffés à 70-200°C et/ou équipés de systèmes de production de faisceaux d'électrons et/ou à de rayonnement actinique du type UV; le temps de passage dans ces fours est fonction de la température et/ou de l'intensité du faisceau ou du rayonnement. Pour une activation thermique simple pour la voie polyaddition, le temps de passage dans ces fours est généralement de l'ordre de 5 à 15 secondes à une température de l'ordre de 100°C et de l'ordre de 1,5 à 3 secondes à une température de l'ordre de 180°C.

Les quantités de compositions déposées sont de l'ordre de 0,5 à 2 g par m² de surface à traiter, ce qui correspond au dépôt de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

### Procédé pour augmenter conjointement l'accrochage au sortir de la machine d'enduction, la résistance mécanique et la réactivité d'un revêtement silocone anti-adhérent et hydrofuge réticulé.

Ce procédé défini ci-avant, s'applique notamment à la composition et au support selon l'invention.

Les exemples suivants sont donnés à titre indicatif et, sans la limiter, permettront de mieux comprendre l'invention.

### EXEMPLES:

### -1- Description des structures silicones et catalyseur mis en oeuvre :

- **POS A** = Huile silicone Vinylée en bout de chaîne M^{Vi}(D)ₚ M^{Vi} : huile PolyDiMéthylSiloxane vinylée avec 0,033 mole de Vi/100g et de viscosité à 25°C = 180 mPa.s à 25°C. Cette huile contient 0,15 % d'inhibiteur EthynylCycloHexanol,
- **POS B1** = Réticulant de formules M(D)ᵥ(D^{H})_{u'}M = Huile silicone hydrogénée dans la chaîne : huile Poly(hydrogénoMéthyl)Siloxane (v = 35 et u'= 50 viscosité : 70 mPas),
- **POS B2 =** Réticulant de formules M(D)ᵥ(D^{H})_{u'}M = Huile silicone hydrogénée dans la chaîne : huile Poly(hydrogénoMéthyl)Siloxane (v = 35 et u'= 50 viscosité ≤ 100 mPas),
- **D :** Catalyseur Pt Karstedt contenant 2000 ppm de Pt,
- **T1 et T2** = Huiles silicones visqueuses PolyDiMéthylSiloxane vinylée avec 0,033 mole de Vi/100g et de viscosité à 25°C = 20.000 (T1) et 4.000 (T2) mPa.s à 25°C,
- Additif base LSR 30 (empâtage silice traitée par un agent de compatibilisation + huile silicone) commercialisée par la société BLUESTAR SILICONES France SAS préparé comme indiqué ci-après :
   Le procédé d'accès aux additifs type base LSR est un procédé multi-étapes mettant en oeuvre plusieurs ingrédients à savoir :
      - polydiméthylsiloxane vinylé (II) = POS E à bouts de chaîne Vi(Me)₂SiO_{1/2} et de viscosité 20.000 mPa.s à 25°C. Vi représente vinyle et Me : méthyle,
      - eau purifiée,
      - hexaméthyldisilazane,
      - éventuellement vinyldimethylsilazane,
      - silice de précipitation ou de combustion de surface spécifique comprise entre 50 et 400 g/m².
   Les différentes opérations du procédé sont décrites de la manière suivante :
      - purge et inertage du mélangeur à l'azote pendant environ 15 minutes,
      - introduction de l'eau purifiée dans le mélangeur pour une concentration comprise entre 1 et 10% poids en environ 20 minutes,
      - première introduction d'huile vinylée (II).
   Cette première charge d'huile vinylée représente une fraction comprise entre 40 et 80 % de la charge totale de l'huile vinylée (II) qui elle-même représente une concentration dans l'additif d'environ 60 à 70%.
      - Introduction de la ou les charges d'hexaméthyldisilazane et/ou de vinyldimé-thylsilazane pendant environ 20 minutes. Cette charge de silazane représente une concentration dans l'additif d'environ 5 à 10% poids.
      - Le mélange réactionnel est maintenu sous agitation pendant environ 20 minutes.
      - Ensuite suit l'introduction de la silice dans le mélangeur sous agitation pendant environ 60 à 120 minutes. La concentration en silice dans l'additif se situe entre 25 et 30% poids.
      - Le mélange réactionnel est maintenu sous agitation pendant environ 60 à 180 minutes.
      - Ensuite démarre une phase de chauffage du mélange qui est porté à une température comprise entre 140 et 160°C et cela pendant une durée d'environ 60 à 180 minutes.
      - Deuxième introduction d'huile vinylée (II).
   Cette deuxième charge d'huile vinylée représente une fraction comprise entre 5 et 15% de la charge totale de l'huile vinylée (II).
      - Le mélange réactionnel est maintenu sous agitation et chauffage pendant environ 60 à 180 minutes
      - Troisième introduction d'huile vinylée (II). Cette troisième charge d'huile vinylée représente une fraction comprise entre 10 et 30 % de la charge totale de l'huile vinylée (II).
      - Le mélange réactionnel est ensuite refroidit sous agitation à une température d'environ 50°C.
      - A cette température des additifs tels que résines ou gommes silicones peuvent être introduites dans certains cas à des concentrations comprises entre 0.1 et 5% poids.
      - L'additif peut ensuite être conditionné.
- **Additif Nanocone VN 10 000** commercialisé par HANSECHEMIE.

### -2- Formulation des bains :

Témoin : sans charge ni huile silicone visqueuse vinylée
Exemples comparatifs EC 1 et EC 2 : sans charge mais avec huiles T1 et T2 visqueuses. Exemples 1 et 2 : Essais avec additif (empâtage) LSR 30.

**TABLEAU 1'**

| **Formulations** | Témoin | EC 1 | EC 2 | Ex 1 | Ex 2 |
|---|---|---|---|---|---|
| POSA | 100 | 100 | 100 | 100 | 100 |
| POS B1 | 8,2 | 8,2 | 8,2 | 8,2 | |
| POS B2 | | | | | 10,1 |
| Catalyseur D | 2,9 | 2,9 | 2,9 | 2,9 | 2,9 |
| Huile vinylée T2 V 4.000 | | 1,4 | | | |
| Huile vinylée T1 V 20.000 | | 1,8 | 3,3 | | |
| Additif Base LSR 30 | | | | 5 | 15 |

Ex 1 bis = même formulation A-B1-D-LSR 30 que l'exemple 1. Exemple Ex 3 : sans charge mais avec Additif Nanocone VN 10.000.

**TABLEAU 2'**

| **Formulations** | Ex 1bis | Ex 3 |
|---|---|---|
| POS A | 100 | 100 |
| POS B1 | 8,2 | 8,2 |
| Catalyseur D | 2,9 | 2,9 |
| Additif LSR 30 | 5 | |
| Additif Nanocone VN 10.000 | | 5 |

### -3- Ordre de mélange et conditions de préparation des bains des Ex 1, 1 bis et 2

Etape 1 : Mélange du polymère POS A de base vinylée et de l'additif (LSR 30)par introduction de la nano charge dans le polymère vinylée POS A sous agitation mécanique avec ou sans fort cisaillement (type ultraturax) pour disperser de manière optimale la nano charge.
Etape 2 : Introduction du réticulant POS B (B1 ou B2) dans le mélange toujours sous agitation mécanique.
Etape 3 : Introduction du catalyseur D dans le mélange toujours sous agitation mécanique.

### -4- Conditions d'enduction et réticulation - nature/référence du support utilisé

Toutes les enductions ont été réalisées sur le pilote enduction ROTOMEC dans les conditions générales de température et de vitesse de déroulement suivantes :
- Type de support enduit : papier glassine réf H65 de Raflatac grammage 62,
- Vitesse machine déroulement support : 100 m / min,
- Température des fours : 155°C,
- Température support: 135 °C,
- Dwell- time: 3, 6 s.

Le dépôt de silicone sur le support peut varier sur une plage allant de 0,1 à 5 g/m².

### -5- Tests :

Une fois sorti de la machine d'enduction le papier siliconé est soumis au contrôle de l'adhérence et de la résistance à l'abrasion du revêtement selon le test de rub-off décrit plus loin, ainsi qu'à la mesure de l'épaisseur de silicone déposée sur le papier et la teneur en extractibles (fraction silicone non réticulée) laquelle permet de caractériser la réactivité du système.

On réalise aussi un test de vieillissement qui consiste à placer le papier siliconé dans une étuve climatique à 50°C / 70% d'humidité résiduelle HR.

On mesure le taux d'extractibles (en sortie de machine d'enduction : "in-line" / 4 jours après la réticulation : "off-line") : le test consiste à immerger le revêtement dans du "MethylIsoButylKetone" (MIBK) puis à doser par spectrophotométrie d'absorption atomique Perkin Elmer 3100 (le silicone ayant transféré dans le solvant.

Moyennant un étalonnage, on accède au taux de silicone extractible du revêtement.

La mesure de "rub-off' pour vérifier l'adhérence sur le support et la résistance à l'abrasion de la couche silicone consiste à frotter l'index sur le support siliconé pour imposer à la couche des contraintes mécaniques. On note le nombre d'aller-retour avec le doigt jusqu'à apparition du phénomène de rub-off (ou gommage), correspondant à une déchirure en lambeaux du revêtement silicone. La note de 10 confirme l'excellente stabilité de la couche silicone.

La note de 10+ qualifiera des revêtements très « durs » et sur lesquelles le frottement du doigt sera difficile).

### -6- Résultats:

Les tableaux 3' et 4' ci-dessous résument les résultats obtenus pour les différents essais réalisés :
- le dépôt de silicone, c'est-à-dire la quantité de silicone déposée par surface de papier;
- la fraction de silicone extractible à la MIBK, c'est-à-dire le taux de silicone non réticulé, la dose de silicium dans le solvant d'extraction étant déterminé par absorption atomique;
- la résistance au rub-off du liner siliconé, immédiate ou après une durée de stockage croissante en étuve humide.

Il doit être rappelé ici que l'on recherche un faible taux d'extractibles (signe d'une polymérisation poussée) et une valeur au test du rub-off proche de 10 (signe une bonne tenue mécanique) ;

**TABLEAU 3'**

| **Essai** | **Ratio SiH/SiVi** | **Pt (ppm)** | **Dépôt (g/m²)** | **% extractible** | **rub-off Sortie machine** | **rub-off 3 jours à 25°C** | **rub-off 3 jours à 50°C et 70% HR** |
|---|---|---|---|---|---|---|---|
| **Témoin** | 2,5 | 50 | 1,05 | 3,5 | **1** | **6** | **4** |
| **EC 1** | 2,5 | 50 | 1,26 | 2,7 | **1** | **10** | **10** |
| **EC 2** | 2,5 | 50 | 1,3 | 2,9 | **1** | **10** | **10** |
| **Ex 1** | 2,5 | 50 | 1,3 | 4,2 | **10** | **10** | **10** |
| **Ex 2** | 2,5 | 50 | 1,3 | 2,6 | **8** | **10** | **10** |

Le tableau 3' ci-dessus montre qu'un faible taux d'extractible est atteint pour les compositions de l'invention et la réactivité des compositions est donc satisfaisante pour l'application souhaité. De plus, les résultats du test au rub-off sont nettement amélioré par rapport aux compositions comparatives et au témoin, ce qui démontre l'excellente adhérence, résistance mécanique et cohésion des revêtements obtenus par la présente invention.

On constate donc l'amélioration de la tenue du papier siliconé, suite à l'incorporation des nano charges, et sans perte notable de la réactivité de la formulation. On constate que la tenue au rub-off est nettement améliorée par rapport aux bains témoins sans charge ou additivés par la même dose d'huile silicone vinylée que celle apportée par l'additif LSR 30.

**TABLEAU 4'**

| **Essai** | **Ratio SiH/SiVi** | **Pt (ppm)** | **dépôt (g/m²)** | **% extractible** | **rub-off Sortie machine** | **rub-off 2jà 25°C** | **rub-off 2j à 50°C et 70% HR** | **rub-off 8jà 25°C** | **rub-off 8j à 50°C et 70% HR** | **rob-off 25 j à 25°C** | **rub-off 25 j à 50°C et 70% HR** |
|---|---|---|---|---|---|---|---|---|---|---|---|
| **Ex 1 bis** | 2,5 | 50 | 1,21 | 2 | **10+** | **10** | **10** | **10** | **10** | **10** | **10** |
| **Ex 3** | 2.5 | 50 | 1,16 | 1,6 | **7** | **10** | **10** | **10** | **10** | **10** | **10** |

Le tableau 4' ci-dessus montre une amélioration en termes d'adhérence, de résistance mécanique et de cohésion au sortir de la machine des revêtements obtenus par la présente invention ex 1 bis comparés à l'exemple comparatif EC 3, dont l'additif est base de Nanocone VN 10.000.

## Revendications

1. Composition silicone liquide d'enduction à une vitesse supérieure ou égale à 100 m/min, sur supports flexibles fibreux ou non et susceptible de réticuler pour former un revêtement anti-adhérent et hydrofuge, comprenant une base silicone apte à durcir par des réactions de polyaddition, radicalaires ou cationiques comprenant pour 100 parties en poids de base silicone, de 1 à 40 parties en poids, de préférence de 1 à 30, de préférence de 3 à 20 parties en poids d'un additif constitué essentiellement:
I. de 1 à 80 % en poids, ou de 5 à 80 % en poids, ou encore de 10 à 50 % en poids, de préférence de 10 à 45 % en poids de charge particulaire siliceuse, de préférence nanométrique, traitée par au moins un agent de compatibilisation,
II. de 95 à 20 % en poids, de préférence 90 à 55 % en poids d'au moins une huile silicone ayant une viscosité ηII en mPa.s à 25°C telle que dans l'ordre croissant de préférence :
- 8.000 ≤ ηII ≤ 2.000.000
- 8.000 ≤ ηII ≤ 500.000
- 8.000 ≤ ηII ≤ 100.000
III. et éventuellement d'au moins une huile silicone de viscosité ηIII inférieure ou égale à 8.000 mPa.s à 25°C ;
la charge particulaire siliceuse étant dispersée dans l'huile silicone II,
éventuellement complétée par l'huile silicone III;
cette composition ayant une viscosité globale inférieure ou égale à 5.000 mPa.s à 25°C, de préférence inférieure ou égale à 2.000 mPa.s à 25°C.

2. Composition selon la revendication 1, **caractérisée en ce qu'**elle est préparée en mélangeant l'additif avec la base silicone, ledit mélange s'effectuant de manière progressive et avec ou sans prédilution dans une huile silicone fluide composant la base silicone.

3. Composition selon la revendication 1, **caractérisée en ce que** la charge particulaire siliceuse traitée est obtenue à partir de la silice et/ou des charges siliceuses semi-renforçantes, telles que des terres de diatomées ou du quartz broyé auxquelles on rajoute un agent de compatibilisation sélectionné parmi:
- les silazanes, de préférence parmi les disilazanes;
- les (cyclo)siloxanes hydroxylés di ou de préférence monofonctionnels;
- les amines, de préférence l'ammoniaque et/ou les alkylamines, la diéthylamine étant particulièrement préférée ;
- les acides organiques, les acides formique et/ou acétique étant préférés ;
- les chlorosilanes,
- des composés organosiliciques tels que des organochlorosilanes, des diorganocyclopolysiloxanes, des hexaorganodisiloxanes, des hexaorganodisilazanes ou des diorganocyclopolysilazanes ;
- et leurs mélanges ; l'hexaméthyldisilazane (HMDZ), associé ou non au divinyltétraméthyl-disilazane, étant particulièrement préféré.

4. Composition selon la revendication 3, **caractérisée en ce que** la silice est une silice de pyrogénation, de surface spécifique BET comprise entre 50 et 400 m²/g et un diamètre moyen compris entre 5 et 500 nm, de préférence entre 5 et 50 nm, et, plus préférentiellement encore, entre 10 et 20 nm.

5. Composition selon la revendication 3, **caractérisée en ce que** la silice est une silice colloïdale, préparée par hydrolyse/condensation de silicate de métaux alcalins ou d'alkyle, dispersée dans une huile silicone, de préférence fonctionnelle, et plus préférentiellement encore fonctionnalisée par des motifs aptes à réagir avec la base silicone et/ou avec l'huile (II) et/ou avec l'éventuelle huile (III).

6. Composition selon au moins l'une des revendications 1 à 5, **caractérisée en ce que** la base silicone comprend au moins un polyorganosiloxane POS, ledit ou lesdits POSétant choisis parmi les polyorganosiloxanes POS ayant une viscosité η en mPa.s à 25°C telle que:
→ 50 ≤ η ≤ 100.000
→ de préférence 100 ≤ η ≤ 10.000
→ et, plus préférentiellement encore 150 ≤ η ≤ 2.000.

7. Composition selon au moins l'une des revendications 1 à 6, **caractérisée en ce que** la base silicone est une base silicone comprenant au moins une huile silicone à motifs ≡Si-alcényle (de préférence ≡Si-vinyle(Vi)) et au moins un réticulant R comprenant des motifs =Si-H aptes à réagir ensemble par polyaddition et **en ce qu'**au regard de la base silicone, y inclus le réticulant R, additionnée de l'additif, le ratio molaire ≡Si-H /≡Si-alcényle (Vi) , est tel que :
1,0 ≤ ≡Si-H /≡Si-alcényle(Vi) ≤ 5
de préférence 1,4 ≤ ≡Si-H /≡Si-alcényle(Vi) ≤ 4.

8. Composition selon au moins l'une des revendications 1 à 7, pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation de cette composition.

9. Procédé de préparation d'un bain d'enduction à base de la composition selon au moins l'une des revendications 1 à 8, ce bain étant destiné à une machine d'enduction à une vitesse supérieure ou égale à 100 m/min, **caractérisé en ce qu'**il consiste essentiellement à mélanger les composants tels que définis dans au moins l'une des revendications 1 à 7.

10. Support revêtu d'un revêtement obtenu à partir de la composition selon au moins l'une des revendications 1 à 8, caractérisé qu'il est choisi parmi les supports souples en papier, carton ou analogue, les supports souples fibreux tissés ou non, les supports souples comportant du polyéthylène et/ou du polypropylène et/ou du polyester et/ou du polychlorure de vinyle, et/ou les supports souples imprimables thermiquement.

11. Utilisation d'un additif silicone comportant de 1 ou 5 à 80 % en poids, ou encore de 10 à 50 % en poids, de préférence de 10 à 45 % en poids de charge particulaire, de préférence nanométrique, dans une huile silicone de préférence réactive, pour augmenter conjointement l'accrochage au sortir de la machine d'enduction, la résistance mécanique et la réactivité d'un revêtement silicone anti-adhérent et hydrofuge enduit sur un support flexible fibreux ou non, susceptible d'être obtenu par réticulation par des réactions de polyaddition, radicalaires ou cationiques d'une composition silicone liquide d'enduction à une vitesse supérieure ou égale à 100 m/min telle que définie à l'une des revendications 1 à 8.

12. Procédé de production de revêtements silicones réticulés anti-adhérents et/ou hydrofuges, sur supports souples, **caractérisé en ce qu'**il consiste essentiellement à mettre en oeuvre la composition silicone liquide d'enduction selon au moins l'une des revendications 1 à 8, dans une machine industrielle d'enduction à une vitesse supérieure ou égale à 100 m/min.

13. Procédé pour augmenter conjointement l'accrochage au sortir de la machine d'enduction, la résistance mécanique et la réactivité d'un revêtement silicone anti-adhérent et hydrofuge enduit sur un support flexible fibreux ou non, dans lequel on réticule une composition silicone liquide d'enduction à une vitesse supérieure ou égale à 100 m/min, ladite composition silicone liquide comprenant une base silicone apte à durcir par des réactions de polyaddition, radicalaires ou cationiques comprenant pour 100 parties en poids de base, de 1 à 40 parties en poids, de préférence de 1 à 30, de préférence de 3 à 20 parties en poids d'un additif constitué essentiellement:
I. de 1 à 80 % en poids, ou de 5 à 80 % en poids, ou encore de 10 à 50 % en poids, de préférence de 10 à 45 % en poids de charge particulaire siliceuse, de préférence nanométrique, traitée par au moins un agent de compatibilisation,
II. de 95 à 20 % en poids, de préférence 90 à 55 % en poids d'au moins une huile silicone ayant une viscosité ηII en mPa.s à 25°C telle que dans l'ordre croissant de préférence :
- 8.000 ≤ ηII ≤ 2.000.000
- 8.000 ≤ ηII ≤ 500.000
- 8.000 ≤ ηII ≤ 100.000
III. et éventuellement d'au moins une huile silicone de viscosité inférieure ou égale à 8.000 mPa.s à 25°C ;
la charge particulaire siliceuse étant dispersée dans l'huile silicone (II), éventuellement complétée par l'huile silicone (III);
et ladite composition ayant une viscosité globale inférieure ou égale à 5.000 mPa.s à 25°C, de préférence inférieure ou égale à 2.000 mPa.s à 25°C.

14. Procédé selon la revendication 13, **caractérisé en ce que** la composition est telle que définie dans au moins l'une des revendications 2 à 8 et **en ce que** le support est tel que défini dans la revendication 10.

## Patentansprüche

1. Flüssige Silikonzusammensetzung zum Beschichten mit einer Geschwindigkeit größer oder gleich 100 m/min auf flexiblen faserigen oder nicht-faserigen Trägern, welche der Vernetzung fähig ist, um eine wasserabweisende Antihaft-Beschichtung zu bilden, umfassend eine Silikon-Basis, die aufgrund von Polyadditionsreaktionen, Radikaloder kationischen Reaktionen, aushärten kann und auf 100 Gewichtsanteile Silikonbasis 1 bis 40 Gewichtsanteile, bevorzugt 1 bis 30 Gewichtsanteile, bevorzugt 3 bis 20 Gewichtsanteile eines Zusatzes umfasst, welcher im Wesentlichen enthält:
I. 1 bis 80 Gewichtsprozent oder 5 bis 80 Gewichtsprozent, oder 10 bis 50 Gewichtsprozent, bevorzugt 10 bis 45 Gewichtsprozent eines teilchenförmigen siliziumhaltigen Füllstoffs, bevorzugt nanometrisch und mit wenigstens einem Kompatibilisierungsmittel behandelt,
II. 95 bis 20 Gewichtsprozent, bevorzugt 90 bis 55 Gewichtsprozent wenigstens eines Silikonöls mit einer Viskosität ηII in mPa·s bei 25 °C, sowie in aufsteigender Ordnung vorzugsweise:
- 8.000 ≤ ηII ≤ 2.000.000
- 8.000 ≤ ηII ≤ 500.000
- 8.000 ≤ ηII ≤ 100.000
III. und eventuell wenigstens ein Silikonöl der Viskosität ηIII kleiner oder gleich 8.000 mPa·s bei 25 °C;
wobei der teilchenförmige siliziumhaltige Füllstoff in dem Silikonöl II, eventuell ergänzt durch Silikonöl III dispergiert wird;
wobei diese Zusammensetzung eine allgemeine Viskosität kleiner oder gleich 5.000 mPa·s bei 25 °C, bevorzugt kleiner oder gleich 2.000 mPa·s bei 25 °C aufweist.

2. Zusammensetzung nach Anspruch 1, **dadurch gekennzeichnet, dass** sie durch Mischung des Zusatzes mit der Silikonbasis zubereitet ist, wobei die Mischung progressiv und mit oder ohne Vorverdünnung in einem flüssigen Silikonöl erfolgt, das die Silikonbasis bildet.

3. Zusammensetzung nach Anspruch 1, **dadurch gekennzeichnet, dass** der behandelte teilchenförmige siliziumhaltige Füllstoff ausgehend von Siliciumdioxyd und/oder halbverstärkenden teilchenförmigen siliziumhaltigen Füllstoffen, wie beispielsweise Diatomeenerden oder gemahlenem Quartz, erhalten wird, zu welchen ein Kompatibilisierungsmittel hinzugefügt wird, welches gewählt ist aus:
- Silazanen, vorzugsweise Disilazanen;
- hydroxylierten difunktionellen, oder bevorzugt monofunktionellen (Cyclo) Siloxanen;
- Aminen, bevorzugt Ammoniak und/oder Alkylaminen, wobei Diethylamin besonders bevorzugt ist;
- organischen Säuren, bevorzugt Ameisensäure und/oder Essigsäure;
- Chlorsilanen,
- Organosiliciumverbindungen wie beispielsweise Organochlorsilane, Diorganocyclopolysiloxane, Hexaorganodisiloxane, Hexaorganodisilazane oder Hexaorganocyclopolysilazane;
- und ihre Mischungen;
- wobei Hexamethyldisilazan (HMDZ), in Verbindung oder nicht in Verbindung mit Divinyltetramethyl-Disilazan, besonders bevorzugt ist.

4. Zusammensetzung nach Anspruch 3, **dadurch gekennzeichnet, dass** das Siliciumdioxyd ein pyrogen hergestelltes Siliciumdioxyd ist, mit spezieller BET-Oberfläche zwischen 50 und 400 m²/g und einem mittleren Durchmesser zwischen 5 und 500 nm, bevorzugt zwischen 5 und 50 nm und noch stärker bevorzugt zwischen 10 und 20 nm.

5. Zusammensetzung nach Anspruch 3, **dadurch gekennzeichnet, dass** das Siliciumdioxyd ein kolloidales Siliciumdioxyd ist, zubereitet durch Hydrolyse/Kondensierung von Silikat alkalischer Metalle oder Alkyl, in einem Silikonöl dispergiert, bevorzugt funktionell oder noch stärker bevorzugt durch Einheiten funktionalisiert, die mit der Silikonbasis und/oder mit Öl (II) und/oder mit dem möglichen Öl (III) reagieren können.

6. Zusammensetzung nach wenigstens einem der Ansprüche 1 bis 5, **dadurch gekennzeichnet, dass** die Silikonbasis wenigstens ein Polyorganosiloxane POS enthält, wobei das oder die POS aus den Polyorganosiloxanen POS mit einer Viskosität η in mPa·s bei 25 °C gewählt sind, wie beispielsweise:
→ 50 ≤ η ≤ 100.000
→ bevorzugt 100 ≤ η ≤ 10.000
→ und noch stärker bevorzugt 150 ≤ η ≤ 2.000.

7. Zusammensetzung nach wenigstens einem der Ansprüche 1 bis 6, **dadurch gekennzeichnet, dass** die Silikonbasis eine Silikonbasis ist, die ein Silikonöl mit ≡Si-Alkenly-Einheiten (bevorzugt =Si-Vinyl(Vi)) umfasst, und wenigstens ein Vernetzungsmittel R mit =Si-H-Einheiten, die durch Polyaddition miteinander reagieren können und dadurch, dass hinsichtlich der Silikonbasis einschließlich des Vernetzungsmittels R mit hinzugefügtem Zusatz das Molverhältnis =Si-H /=Si-Alkenly(Vi) derart ist, dass
1,0 ≤ =Si-H /≡Si-Alkenly(Vi) ≤ 5
bevorzugt 1,4 ≤ ≡Si-H /≡Si-Alkenly(Vi) ≤ 4.

8. Zusammensetzung nach wenigstens einem der Ansprüche 1 bis 7, zur gemeinsamen Verbesserung der Verbindung am Ausgang der Beschichtungsmaschine, des mechanischen Widerstandes und der Reaktionsfähigkeit einer wasserabweisenden Antihaft-Silikon-Beschichtung auf einem flexiblen faserigen oder nicht-faserigen Träger, welches durch Vernetzung dieser Zusammensetzung erzeugt werden kann.

9. Zubereitungsverfahren für ein Beschichtungsbad auf der Basis der Zusammensetzung nach wenigstens einem der Ansprüche 1 bis 8, wobei dieses Bad für eine Beschichtungsmaschine mit einer Geschwindigkeit von größer oder gleich 100 m/min vorgesehen ist, **dadurch gekennzeichnet, dass** es im Wesentlichen daraus besteht, die Bestandteile gemäß der Beschreibung in wenigstens einem der Ansprüche 1 bis 7 zu mischen.

10. Mit einer Beschichtung beschichteter Träger, der ausgehend von der Zusammensetzung nach wenigstens einem der Ansprüche 1 bis 8 erzeugt wurde, **dadurch gekennzeichnet, dass** er gewählt wurde aus flexiblen Papierträgern, Karton oder ähnlichem, flexiblen gewebten oder nicht gewebten faserigen Trägern, flexiblen Trägern mit Polyethylen und/oder Polypropylen und/oder Polyester und/oder Polyvinylchlorid und/oder thermobedruckbaren flexiblen Trägern.

11. Verwendung eines Silikonzusatzes, der 1 oder 5 bis 80 Gewichtsprozent umfasst, oder 10 bis 50 Gewichtsprozent, bevorzugt 10 bis 45 Gewichtsprozent eines teilchenförmigen, bevorzugt nanometrischen Füllstoffes in einem bevorzugt reaktiven Silikonöl aufweist, um gemeinsam die Verbindung am Ausgang der Beschichtungsmaschine, den mechanischen Widerstand und die Reaktionsfähigkeit einer wasserabweisenden Antihaft-Silikon-Beschichtung auf einem flexiblen faserigen oder nicht-faserigen Träger zu verbessern, welches durch Vernetzung durch Polyadditionsreaktionen, Radikal- oder kationischen Reaktionen einer flüssigen Silikonzusammensetzung zur Beschichtung mit einer Geschwindigkeit größer oder gleich 100 m/min erreicht werden kann, wie in einem der Ansprüche 1 bis 8 beschrieben.

12. Produktionsverfahren für vernetzte Antihaft- und/oder wasserabweisende Silikonbeschichtungen auf flexiblen Trägern, **dadurch gekennzeichnet, dass** es im Wesentlichen darin besteht, die flüssige Silikonzusammensetzung zum Beschichten nach wenigstens einem der Ansprüche 1 bis 8 in einer industriellen Beschichtungsmaschine mit einer Geschwindigkeit größer oder gleich 100 m/min anzuwenden.

13. Verfahren zur gemeinsamen Verbesserung der Verbindung am Ausgang der Beschichtungsmaschine, des mechanischen Widerstandes und der Reaktionsfähigkeit einer wasserabweisenden Antihaft-Silikon-Beschichtung auf einem flexiblen faserigen oder nicht-faserigen Träger, wobei eine flüssige Silikonzusammensetzung zum Beschichten mit einer Geschwindigkeit größer oder gleich 100 m/min vernetzt wird, wobei die flüssige Silikonzusammensetzung eine Silikon-Basis umfasst, die aufgrund von Polyadditionsreaktionen, Radikal- oder kationischen Reaktionen, aushärten kann und auf 100 Gewichtsanteile Silikonbasis 1 bis 40 Gewichtsanteile, bevorzugt 1 bis 30 Gewichtsanteile, bevorzugt 3 bis 20 Gewichtsanteile eines Zusatzes umfasst, welcher im Wesentlichen enthält:
I. 1 bis 80 Gewichtsprozent oder 5 bis 80 Gewichtsprozent oder 10 bis 50 Gewichtsprozent, bevorzugt 10 bis 45 Gewichtsprozent eines teilchenförmigen siliziumhaltigen Füllstoffs, bevorzugt nanometrisch und mit wenigstens einem Kompatibilisierungsmittel behandelt,
II. 95 bis 20 Gewichtsprozent, bevorzugt 90 bis 55 Gewichtsprozent wenigstens eines Silikonöls mit einer Viskosität ηII in mPa·s bei 25 °C, sowie in aufsteigender Ordnung vorzugsweise:
- 8.000 ≤ ηII ≤ 2.000.000
- 8.000 ≤ ηII ≤ 500.000
- 8.000 ≤ ηII ≤ 100.000
III. und eventuell wenigstens ein Silikonöl der Viskosität ηIII kleiner oder gleich 8.000 mPa·s bei 25 °C;
wobei der teilchenförmige siliziumhaltigen Füllstoff in dem Silikonöl (II), eventuell ergänzt durch Silikonöl (III) dispergiert wird;
und wobei diese Zusammensetzung eine allgemeine Viskosität kleiner oder gleich 5.000 mPa·s bei 25 °C, bevorzugt kleiner oder gleich 2.000 mPa·s bei 25 °C aufweist.

14. Verfahren nach Anspruch 13, **dadurch gekennzeichnet, dass** die Zusammensetzung der Beschreibung in wenigstens einem der Ansprüche 2 bis 8 entspricht, und dadurch, dass der Träger der Beschreibung in Anspruch 10 entspricht.

## Claims

1. A liquid silicone composition for coating at a speed of greater than or equal to 100 m/min onto fibrous or nonfibrous flexible supports and which is capable of crosslinking to form a release and water-repellent coating, comprising a silicone base capable of curing by radical or cationic polyaddition reactions comprising, per 100 parts by weight of silicone base, from 1 to 40 parts by weight, preferably from 1 to 30 parts by weight, preferably from 3 to 20 parts by weight, of an additive essentially composed:
I. of from 1 to 80% by weight, or from 5 to 80% by weight, or also from 10 to 50% by weight, preferably from 10 to 45% by weight, of particulate siliceous filler, preferably of nanometric size, treated with at least one compatibilizing agent,
II. of from 95 to 20% by weight, preferably from 90 to 55% by weight, of at least one silicone oil having a viscosity nil, in mPa.s at 25°C, such that, in increasing order of preference:
- 8000 ≤ ηII ≤ 2 000 000
- 8000 ≤ ηII ≤ 500 000
- 8000 ≤ ηII ≤ 100 000
III. and optionally of at least one silicone oil with a viscosity ηIII of less than or equal to 8000 mPa.s at 25°C;
the particulate siliceous filler being dispersed in the silicone oil II, optionally made up with the silicone oil III;
this composition having an overall viscosity of less than or equal to 5000 mPa.s at 25°C, preferably of less than or equal to 2000 mPa.s at 25°C.

2. The composition as claimed in claim 1, **characterized in that** it is prepared by mixing the additive with the silicone base, said mixing being carried out gradually and with or without predilution in a fluid silicone oil forming the silicone base.

3. The composition as claimed in claim 1, **characterized in that** the particulate siliceous filler treated is obtained from silica and/or semi-reinforcing siliceous fillers, such as diatomaceous earths or ground quartz, to which is added a compatibilizing agent selected from:
- silazanes, preferably from disilazanes;
- difunctional or, preferably, monofunctional hydroxylated (cyclo)siloxanes;
- amines, preferably ammonia and/or alkylamines, diethylamine being particularly preferred;
- organic acids, formic acid and/or acetic acid being preferred;
- chlorosilanes;
- organosilicon compounds, such as organochlorosilanes, diorganocyclopolysiloxanes, hexaorganodisiloxanes, hexaorganodisilazanes or diorganocyclopolysilazanes;
- and their mixtures;
hexamethyldisilazane (HMDZ), in or not in combination with divinyltetramethyldisilazane, being particularly preferred.

4. The composition as claimed in claim 3, **characterized in that** the silica is a pyrogenic silica with a BET specific surface of between 50 and 400 m²/g and a mean diameter of between 5 and 500 nm, preferably between 5 and 50 nm and more preferably still between 10 and 20 nm.

5. The composition as claimed in claim 3, **characterized in that** the silica is a colloidal silica, prepared by hydrolysis/condensation of alkali metal or alkyl silicates, dispersed in a silicone oil, preferably a functional silicone oil, and more preferably still functionalized by units capable of reacting with the silicone base and/or with the oil (II) and/or with the optional oil (III).

6. The composition as claimed in at least one of claims 1 to 5, **characterized in that** the silicone base comprises at least one polyorganosiloxane POS, said POS compound or compounds being chosen from polyorganosiloxanes POSs having a viscosity η, in mPa.s at 25°C, such that:
→ 50 ≤ η ≤ 100 000
→ preferably 100 ≤ η ≤ 10 000
→ and more preferably still 150 ≤ η ≤ 2000.

7. The composition as claimed in at least one of claims 1 to 6, **characterized in that** the silicone base is a silicone base comprising at least one silicone oil comprising ≡Si-alkenyl (preferably ≡Si-vinyl (Vi)) units and at least one crosslinking agent R comprising ≡Si-H units capable of reacting together by polyaddition and **in that**, with regard to the silicone base, including the crosslinking agent R, additivated with the additive, the =Si-H/=Si-alkenyl (Vi) molar ratio is such that:
1.0 ≤ =Si-H/=Si-alkenyl (Vi) ≤ 5
preferably 1.4 ≤ =Si-H/=Si-alkenyl (Vi) ≤ 4.

8. The composition as claimed in at least one of claims 1 to 7, for jointly increasing the attachment on departing from the coating device, the mechanical strength and the reactivity of a release and water-repellent silicone coating coated onto a fibrous or nonfibrous flexible support capable of being obtained by crosslinking this composition.

9. A process for the preparation of a coating bath based on the composition as claimed in at least one of claims 1 to 8, this bath being intended for coating device at a speed of greater than or equal to 100 m/min , **characterized in that** it consists essentially in mixing the components as defined in at least one of claims 1 to 7.

10. A support coated with a coating obtained from the composition as claimed in at least one of claims 1 to 8, **characterized in that** it is chosen from flexible supports made of paper, board or the like, flexible woven or nonwoven fibrous supports, flexible supports comprising polyethylene and/or polypropylene and/or polyester and/or poly(vinyl chloride), and/or thermally printable flexible supports.

11. The use of a silicone additive comprising from 1 or 5 to 80% by weight, or also from 10 to 50% by weight, and preferably from 10 to 45% by weight, of particulate filler, preferably of nanometric size, in a silicone oil, preferably a reactive silicone oil, in order to jointly increase the attachment on departing from the coating device, the mechanical strength and the reactivity of a release and water-repellent silicone coating coated onto a fibrous or nonfibrous flexible support capable of being obtained by crosslinking by radical or cationic polyaddition reactions of a liquid silicone composition for coating at a speed of greater than or equal to 100 m/min as defined in one of claims 1 to 8.

12. A process for the production of crosslinked release and/or water-repellent silicone coatings on flexible supports, **characterized in that** it consists essentially in employing the liquid silicone coating composition as claimed in at least one of claims 1 to 8 in an industrial coating device at a speed of greater than or equal to 100 m/min.

13. A process for jointly increasing the attachment on departing from the coating device, the mechanical strength and the reactivity of a release and water-repellent silicone coating coated onto a fibrous or nonfibrous flexible support, in which a liquid silicone composition for coating at a speed of greater than or equal to 100 m/min is crosslinked,
said liquid silicone composition comprising a silicone base capable of curing by radical or cationic polyaddition reactions comprising, per 100 parts by weight of base, from 1 to 40 parts by weight, preferably from 1 to 30 parts by weight, preferably from 3 to 20 parts by weight, of an additive essentially composed:
I. of from 1 to 80% by weight, or from 5 to 80% by weight, or also from 10 to 50% by weight, preferably from 10 to 45% by weight, of particulate siliceous filler, preferably of nanometric size, treated with at least one compatibilizing agent,
II. of from 95 to 20% by weight, preferably from 90 to 55% by weight, of at least one silicone oil having a viscosity ηII, in mPa.s at 25°C, such that, in increasing order of preference:
- 8000 ≤ ηII ≤ 2 000 000
- 8000 ≤ ηII ≤ 500 000
- 8000 ≤ ηII ≤ 100 000
III. and optionally of at least one silicone oil with a viscosity of less than or equal to 8000 mPa.s at 25°C;
the particulate siliceous filler being dispersed in the silicone oil (II), optionally made up with the silicone oil (III);
and said composition having an overall viscosity of less than or equal to 5000 mPa.s at 25°C, preferably of less than or equal to 2000 mPa.s at 25°C.

14. The process as claimed in claim 13, **characterized in that** the composition is as defined in at least one of claims 2 to 8 and **in that** the support is as defined in claim 10.
